# EUROPEAN PATENT SPECIFICATION

(11) **EP 3 141 080 B1**
(45) Date of publication and mention of the grant of the patent: **29.09.2021**
(21) Application number: 15789818.0
(22) Date of filing: 07.05.2015
(51) Int. Cl.: H04W 28/08, H04W 48/10, H04W 84/12, H04W 88/06

(54) **DEVICES FOR INTERWORKING BETWEEN A UNIVERSAL MOBILE TELECOMMUNICATIONS SYSTEM (UMTS) NETWORK AND A WIRELESS LOCAL AREA NETWORK (WLAN)**
VORRICHTUNGEN ZUR ZUSAMMENARBEIT ZWISCHEN EINEM NETZWERK EINES UNIVERSELLEN MOBILTELEKOMMUNIKATIONSSYTEMS (UMTS) UND EINEM DRAHTLOSEN LOKALEN NETZWERK (WLAN)
DISPOSITIFS D'INTERFONCTIONNEMENT ENTRE UN RÉSEAU DE SYSTÈME DE TÉLÉCOMMUNICATIONS MOBILES UNIVERSELLES (UMTS) ET UN RÉSEAU LOCAL SANS FIL (WLAN)

(30) Priority: 08.05.2014 US 201461990693 P; 28.07.2014 US 201462029936 P; 24.12.2014 US 201414583057
(43) Date of publication of application: 15.03.2017
(73) Proprietor: Apple Inc., Cupertino, CA 95014 (US)
(72) Inventor: SIROTKIN, Alexander, 49527 Petach Tikva M (IL); BURBIDGE, Richard, Shrivenham OXF SN6 8HR (GB); FONG, Mo-Han, Sunnyvale, California 94087 (US); HIMAYAT, Nageen, Fremont, California 94539 (US); CHOI, Hyung-Nam, 22117 Hamburg (HH) (DE)
(74) Representative: Lang, Johannes
(86) International application number: PCT/US2015/029740
(87) International publication number: WO 2015/171926

(56) References cited:
- US-A1- 2013 031 271
- US-A1- 2013 242 897
- US-A1- 2014 092 742
- "3rd Generation Partnership Project; Technical Specification Group Radio Access Network; Study on Wireless Local Area Network (WLAN) - 3GPP radio interworking (Release 12)", 3GPP DRAFT; 37834-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 7 January 2014 (2014-01-07), XP050917326, Retrieved from the Internet: URL:http://www.3gpp.org/ftp/Specs/zItuInfo /M.2012-2/2014-12/Rel-12/37_series/ [retrieved on 2014-01-07]
- LG ELECTRONICS INC ET AL: "Text proposal on WLAN 3GPP radio interworking solution 2", 3GPP DRAFT; R2-132849 TEXT PROPOSAL ON WLAN 3GPP RADIO INTERWORKING SOLUTION 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Barcelona, Spain; 20130819 - 20130823 10 August 2013 (2013-08-10), XP050718561, Retrieved from the Internet: URL:http://www.3gpp.org/ftp/tsg_ran/WG2_RL 2/TSGR2_83/Docs/ [retrieved on 2013-08-10]
- INTEL CORPORATION ET AL: "Text Proposal on WLAN/3GPP radio interworking solution 1", 3GPP DRAFT; R2-133698-TP_ON_WLAN_INTERWORKING_SOLUTION _1_RAN2#83-BIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Ljubljana, Slovenia; 20131007 - 20131011 11 October 2013 (2013-10-11), XP050752793, Retrieved from the Internet: URL:http://www.3gpp.org/ftp/tsg_ran/WG2_RL 2/TSGR2_83bis/Docs/ [retrieved on 2013-10-11]
- INTEL CORPORATION: "Introduction of WLAN/3GPP radio interworking functionality into specifications for LTE and UMTS", 3GPP DRAFT; R2-141758_INTRODUCING WLAN-3GPP-STAGE-2-3-FUNCTIONALITY-V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Valencia, Spain; 20140331 - 20140404 1 April 2014 (2014-04-01), XP050792895, Retrieved from the Internet: URL:http://www.3gpp.org/ftp/Meetings_3GPP_ SYNC/RAN2/Docs/ [retrieved on 2014-04-01]
- LG ELECTRONICS INC: "Assistance information and signaling procedure", 3GPP DRAFT; R2-140771 ASSISTANCE INFORMATION AND SIGNALING PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Prague, Czech Republic; 20140210 - 20140214 9 February 2014 (2014-02-09), XP050792059, Retrieved from the Internet: URL:http://www.3gpp.org/ftp/Meetings_3GPP_ SYNC/RAN2/Docs/ [retrieved on 2014-02-09]
- ALCATEL-LUCENT ET AL: "Stage 3 design considerations for 3GPP-WiFi radio interworking", 3GPP DRAFT; R2-141574 ANDSF_RRCIMPACT_V05, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Valencia, Spain; 20140331 - 20140404 22 March 2014 (2014-03-22), XP050792727, Retrieved from the Internet: URL:http://www.3gpp.org/ftp/Meetings_3GPP_ SYNC/RAN2/Docs/ [retrieved on 2014-03-22]
- ALCATEL-LUCENT ET AL: "RAN parameters for traffic steering", 3GPP DRAFT; R2-140715 WIFI_PARAMETERS_V0.6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Prague, Czech Republic; 20140210 - 20140214 9 February 2014 (2014-02-09), XP050792009, Retrieved from the Internet: URL:http://www.3gpp.org/ftp/Meetings_3GPP_ SYNC/RAN2/Docs/ [retrieved on 2014-02-09]
- INTEL CORPORATION: "Proposed way forward on WLAN/3GPP radio interworking", 3GPP DRAFT; R2-140842 AGREEMENTS ON WLAN-3GPP INTERWORKING-V9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 14 February 2014 (2014-02-14), XP050754691, Retrieved from the Internet: URL:http://www.3gpp.org/ftp/tsg_ran/WG2_RL 2/TSGR2_85/Docs/ [retrieved on 2014-02-14]
- None

## Description

### Field

Embodiments of the present disclosure generally relate to the field of wireless communication, and more particularly, to systems, devices, and methods for universal mobile telecommunications system (UMTS) and wireless local area interworking.

### Background

A cellular network may direct a user equipment (UE) to transfer network traffic to a wireless local area network (WLAN). Transferring the network traffic to the WLAN offloads the traffic from the cellular network, thereby freeing up resources on the cellular network for other UEs.

The following documents describes systems pertaining to the features of the preamble of the independent claims:
"3rd Generation Partnership Project; Technical Specification Group Radio Access Network; Study on Wireless Local Area Network (WLAN) - 3GPP radio interworking (Release 12)", (20140107), 3GPP DRAFT; 37834-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX,
LG ELECTRONICS INC ET AL, "Text proposal on WLAN 3GPP radio interworking solution 2", vol. RAN WG2, no. Barcelona, Spain; 20130819 - 20130823, (20130810), 3GPP DRAFT; R2-132849 TEXT PROPOSAL ON WLAN 3GPP RADIO INTERWORKING SOLUTION 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS, and
INTEL CORPORATION ET AL, "Text Proposal on WLAN/3GPP radio interworking solution 1", vol. RAN WG2, no. Ljubljana, Slovenia; 20131007 - 20131011, (20131011), 3GPP DRAFT; R2-133698-TPON WLAN INTERWORKING_SOLUTION_1_RAN2#83-BIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX.

The following documents relate to the technological background of the present invention:
INTEL CORPORATION, "Introduction of WLAN/3GPP radio interworking functionality into specifications for LTE and UMTS", vol. RAN WG2, no. Valencia, Spain; 20140331 - 20140404, (20140401), 3GPP DRAFT; R2-141758_INTRODUCING WLAN-3GPP-STAGE-2-3-FUNCTIONALITY-V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX,
LG ELECTRONICS INC, "Assistance information and signaling procedure", vol. RAN WG2, no. Prague, Czech Republic; 20140210 - 20140214, (20140209), 3GPP DRAFT; R2-140771 ASSISTANCE INFORMATION AND SIGNALING PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX,
ALCATEL-LUCENT ET AL, "Stage 3 design considerations for 3GPP-WiFi radio interworking", vol. RAN WG3, no. Valencia, Spain; 20140331 - 20140404, (20140322), 3GPP DRAFT; R2-141574 ANDSF_RRCIMPACT_V05, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX,
ALCATEL-LUCENT ET AL, "RAN parameters for traffic steering", vol. RAN WG3, no. Prague, Czech Republic; 20140210 - 20140214, (20140209), 3GPP DRAFT; R2-140715 WIFI PARAMETERS_V0.6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX, and
INTEL CORPORATION, "Proposed way forward on WLAN/3GPP radio interworking", vol. RAN WG2, no. Prague, Czech Republic; 20140210 - 20140214, (20140214), 3GPP DRAFT; R2-140842 AGREEMENTS ON WLAN-3GPP INTERWORKING-V9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX.

### Summary of Invention

The present invention is defined in the independent claims. Preferred features are recited in the dependent claims. In the following description, any embodiment referred to and not falling within the scope of the claims is merely an example useful to the understanding of the invention.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figure 1 schematically illustrates a wireless communication environment in accordance with various embodiments.
Figure 2 is flowchart of traffic steering method to be performed by a user equipment to steer traffic from a universal terrestrial radio access network (UTRAN) to a wireless local area network (WLAN) in accordance with some embodiments.
Figure 3 is flowchart of traffic steering method to be performed by a user equipment to steer traffic from a WLAN to a UTRAN in accordance with some embodiments.
Figure 4 is a flowchart of a method for managing traffic steering to be performed by a network node in accordance with some embodiments.
Figure 5 is a block diagram of an example computing device that may be used to practice various embodiments described herein.

### Detailed Description

In the following detailed description, reference is made to the accompanying drawings, which form a part hereof wherein like numerals designate like parts throughout, and in which is shown by way of illustration embodiments that may be practiced. It is to be understood that other embodiments may be utilized and structural or logical changes may be made without departing from the scope of the present disclosure.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed or described operations may be omitted in additional embodiments.

For the purposes of the present disclosure, the term "or" is used as an inclusive term to mean at least one of the components coupled with the term. For example, the phrase "A or B" means (A), (B), or (A and B); and the phrase "A, B, or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), or memory (shared, dedicated, or group) that execute one or more software or firmware programs, a combinational logic circuit, or other suitable hardware components that provide the described functionality.

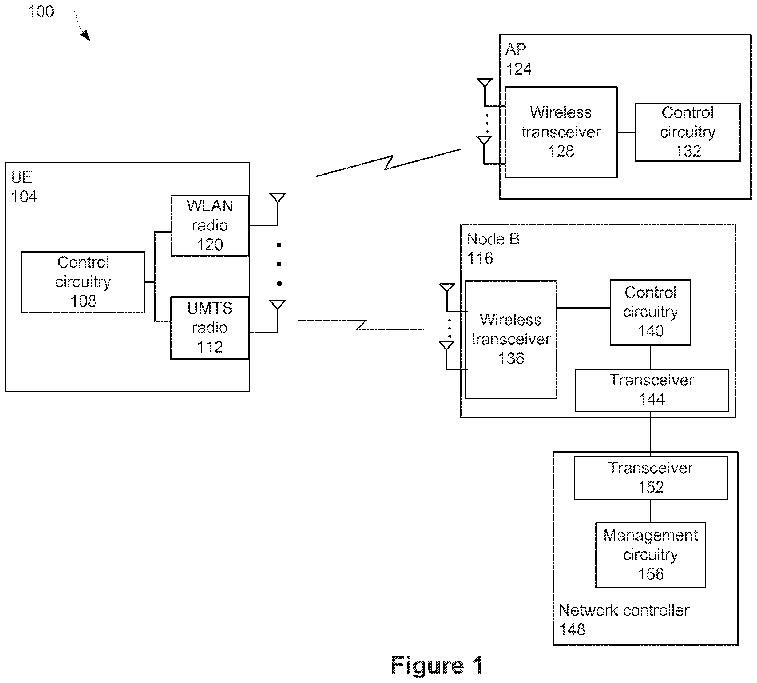

Figure 1 schematically illustrates a wireless communication environment 100 in accordance with various embodiments. The environment 100 may include a user equipment (UE) 104 that is capable of communicating over at least two wireless communication networks, including a cellular network and a wireless local area network (WLAN). The cellular network may be, for example, universal terrestrial radio access network (UTRAN) in accordance with a 3rd Generation Partnership Project (3GPP) universal mobile telecommunications system (UMTS) protocol. The UE 104 may include control circuitry 108 coupled with a UMTS radio 112 and a WLAN radio. 120. The UE 104 may use the UMTS radio 112 to wirelessly communicate with one or more nodes of the UTRAN, for example, Node B 116. The UE 104 may use the WLAN radio 120 to wirelessly communicate with one or more nodes of the WLAN, for example, access point (AP) 124.

The AP 124 may include wireless transceiver 128 coupled with control circuitry 132. The control circuitry 132 may control operation and communication of the AP 124. In some embodiments the control circuitry 132 may control communications over the wireless transceiver 128 and one or more additional transceivers, which may be wired or wireless.

The Node B 116 may also include a wireless transceiver 136 and control circuitry 140. The control circuitry 140 may control operation and communication of the Node B 116. The Node B 116 may be part of the UTRAN and may include transceiver 144 to communicate with one or more nodes of the UTRAN, for example, network controller 148. The eNB 116 may include one or more additional transceivers, which may be wired or wireless.

The network controller 148 may include a transceiver 152 to communicate with the transceiver 144 of the Node B 116. The network controller 148 may further include management circuitry 156 coupled to the transceiver 152. In some embodiments, the network controller 148 may manage a plurality of Node Bs 116 of the UTRAN. Alternatively, or additionally some or all of the network controller 148 (e.g., some or all of the management circuitry 156) may be included in the Node B 116.

The network controller 148 may be part of the UTRAN along with the Node B 116, another UTRAN, or an Evolved Packet Core (EPC) that is coupled with the UTRAN of the Node B 116. The EPC may include an access network discovery and selection function (ANDSF) to assist UEs to discover non-3GPP access networks that can be used for data communication in addition to 3GPP access networks, and provide the UE with rules policing the connection to these networks. The EPC may also provide a communication interface between various radio access networks (RANs) and other networks. For example, the EPC may provide a communication interface between the UTRAN and the WLAN described herein.

Various embodiments provide RAN-assisted UE-based bidirectional traffic steering between the UTRAN and one or more WLANs. In various embodiments, the management circuitry 156 of the network controller 148 may transmit (e.g., via the Node B 116) RAN parameter information to the UE 104 for use by the UE 104 for traffic steering between the UTRAN and a WLAN. The RAN parameter information may include one or more RAN assistance parameters. The RAN assistance parameters may include one or more thresholds for use by the UE 104 for traffic steering between the UTRAN and the WLAN. In some embodiments, the RAN assistance parameters may further include one or more WLAN identifiers and/or an offload preference indicator (OPI). The WLAN identifiers may identify APs and/or WLANs that are available to the UE 104 for traffic steering.

The OPI may be used for one or more ANDSF policies for the UE 104. For example, an ANDSF server may provide multiple sets of ANDSF policies to the UE 104. The network may use the OPI to indicate to the UE 104 which ANDSF policy the UE 104 should currently use.

The RAN assistance parameters may be transmitted to the UE 104 via broadcast signaling (that is directed to a plurality of UEs) and/or dedicated signaling (that is designated for the UE 104). For example, the RAN assistance parameters may be included in a system information block (SIB) that is transmitted via broadcast signaling. Additionally, or alternatively, the RAN assistance parameters may be included in a UTRAN mobility information message or a cell update confirm message that is dedicated to the UE 104.

In various embodiments, the control circuitry 108 of the UE 104 may receive the RAN assistance parameters. The control circuitry 108 may steer traffic between the UMTS radio and the WLAN radio based on the thresholds. The control circuitry 108 may steer traffic between the UMTS radio and the WLAN radio based on one or more traffic steering rules that use the thresholds, as further discussed below. In some embodiments, the RAN assistance parameters may further include a timer value used in evaluation of traffic steering rules. For example, the timer value may indicate a length of time during which the traffic steering rules must be satisfied before initiating traffic steering between the UTRAN and the WLAN.

In some embodiments, the UE 104 may steer traffic between the UTRAN and WLAN when in one or more radio resource control (RRC) states with the Node B 116, such as an idle mode, a CELL_DCH state, a CELL_FACH state, a CELL PCH state, or a URA PCH state.

In some embodiments, if the UE 104 is provisioned with ANDSF policies, it may forward the current RAN assistance parameters to upper layers of the UE. In some embodiments, if the UE 104 is in idle mode and the UE 104 receives the broadcast RAN assistance parameters while the validity timer is still running, the UE may not forward the received parameters, but rather the stored parameters that were previously received via dedicated signaling (if any). If the UE 104 is not provisioned with ANDSF policies, the UE 104 may use the RAN assistance parameters for traffic steering according to the traffic steering rules discussed further below.

In some embodiments, the UE 104 may receive RAN assistance parameters via broadcast signaling and via dedicated signaling. In such situations, the UE 104 may use the RAN assistance parameters received via dedicated signaling and may not use the RAN assistance parameters received via broadcast signaling. Some behavior of the UE 104 with respect to the RAN assistance parameters may depend on the RRC state of the UE 104.

For example, in some embodiments, if the UE 104 is in the CELL_DCH state, the UE 104 may use the parameters obtained via dedicated signaling only, and may not use the RAN assistance parameters obtained via broadcast signaling. The UE 104 may keep the RAN assistance parameters, that were obtained via dedicated signaling, upon handover from a serving cell to a target cell of the UTRAN (e.g., handover from the Node B 116 to another Node B of the UTRAN) if the RAN assistance parameters are not reconfigured or deleted by the UTRAN during the handover. The UE 104 may discard the RAN assistance parameters obtained via broadcast signaling when the UE 104 enters the CELL_DCH state. Additionally, or alternatively, the UE 104 may discard the RAN assistance parameters obtained via dedicated signaling upon serving radio network subsystem (SRNS) relocation.

In some embodiments, if the UE 104 is in the CELL_FACH state, the UE 104 may apply the RAN assistance parameters obtained via dedicated signaling for traffic steering instead of the RAN assistance parameters obtained via broadcast signaling, if the UE 104 has received RAN assistance parameters via dedicated signaling from the serving cell. If the UE 104 has not received RAN assistance parameters via dedicated signaling from the serving cell, the UE 104 may apply the RAN assistance parameters obtained via broadcast signaling for traffic steering. The UE 104 in the CELL_FACH state may discard the dedicated parameters upon cell reselection (e.g., to select a new cell as the serving cell). Accordingly, the UE 104 may use the RAN assistance parameters obtained via broadcast signaling until or unless the UE 104 receives RAN assistance parameters from the new serving cell.

In some embodiments, if the UE 104 is in the idle mode, the CELL_PCH state, or the URA_PCH state, the UE 104 may apply the RAN assistance parameters obtained via dedicated signaling. If the UE 104 has not received RAN assistance parameters via dedicated signaling, the UE 104 may apply the RAN assistance parameters obtained via broadcast signaling. Upon cell reselection, the UE 104 may discard the RAN assistance parameters obtained via dedicated signaling, and may use the RAN assistance parameters obtained via broadcast signaling until new RAN assistance parameters are obtained via dedicated signaling.

When the UE 104 enters the idle mode, the UE 104 may start a timer. The UE 104 may use the RAN assistance parameters received via dedicated signaling until the timer expires. When the timer expires, the UE 104 may discard the RAN assistance parameters obtained via dedicated signaling and apply the RAN assistance parameters obtained via broadcast signaling. In some embodiments, the UE 104 may additionally or alternatively use the timer in other RRC states, such as the CELL_PCH state or the URA_PCH state.

In some embodiments, the UTRAN may be shared by a plurality of public land mobile networks (PLMNs). In some such embodiments, individual PLMNs that share the UTRAN may transmit independent sets of RAN assistance parameters.

In various embodiments, the RAN assistance parameters may include a first set of thresholds that are to be used by the UE 104 for steering traffic from the UTRAN to the WLAN, and a second set of thresholds that are to be used by the UE 104 for steering traffic from the WLAN to the UTRAN. The thresholds of the first and second sets of thresholds may include one or more of a UTRAN signal strength threshold, a UTRAN signal quality threshold, a WLAN utilization threshold, a WLAN backhaul data rate threshold (uplink and/or downlink), and/or a WLAN beacon received signal strength indicator (RSSI) threshold. As discussed above, the RAN assistance parameters may further include one or more WLAN identifiers (used in access network selection and traffic steering rules), an OPI (used in ANDSF policies), and/or a timer value (used in the traffic steering rules). The UE 104 may use the RAN assistance parameters in the evaluation of the traffic steering rules, described herein, to perform traffic steering decisions between EUTRAN and WLAN.

For example, the first set of thresholds for traffic steering from the UTRAN to the WLAN may include a low UTRAN received signal quality threshold (ThreshServingOffloadWLAN, LowQ), a low UTRAN received signal power threshold (ThreshServingOffloadWLAN, LowP), a low WLAN channel utilization threshold (ThreshChUtilWLAN, Low), a high WLAN downlink backhaul rate threshold (ThreshBackhRateDlWLAN, High), a high WLAN uplink backhaul rate threshold (ThreshBackhRateUlWLAN, High), and/or a high beacon received signal strength indicator (RSSI) threshold (ThreshRSSIWLAN, High). The second set of thresholds for traffic steering from the WLAN to the UTRAN may include a high UTRAN received signal quality threshold (ThreshServingOffloadWLAN, HighQ), a high UTRAN received signal power threshold (ThreshServingOffloadWLAN, HighP), a high WLAN channel utilization threshold (ThreshChUtilWLAN, High), a low WLAN downlink backhaul rate threshold (ThreshBackhRateDlWLAN, Low), a low WLAN uplink backhaul rate threshold (ThreshBackhRateUlWLAN, Low), and/or a low beacon RSSI threshold (ThreshRSSIWLAN, Low). A "high" threshold of one set of thresholds may generally have a greater value than a corresponding "low threshold" of the other set of thresholds. Accordingly, the corresponding thresholds of the two sets of thresholds may have different values to avoid/reduce frequent switching between the UTRAN and the WLAN (e.g., the "ping-pong effect").

In some embodiments, the threshold ThreshServingOffloadWLAN, LowP may specify a common pilot channel (CPICH) received signal code power (RSCP) threshold (measured in dBm) for frequency-division duplexing (FDD) cells of the UTRAN and/or a primary common control physical channel (P-CCPCH) RSCP for time-division duplexing (TDD) cells of the UTRAN for use by the UE 104 for traffic steering to the WLAN. The threshold ThreshServingOffloadWLAN, HighP may specify the CPICH RSCP for FDD cells and/or a P-CCPCH RSCP for TDD cells for use by the UE 104 for traffic steering to the UTRAN. The threshold ThreshServingOffloadWLAN, LowQ may specify the CPICH Ec/NO (quality energy per chip over total received power spectral density) for FDD cells for use by the UE 104 for traffic steering to the WLAN. The threshold ThreshServingOffloadWLAN, HighQ may specify the CPICH Ec/NO for FDD cells for use by the UE 104 for traffic steering to the UTRAN.

In some embodiments, ThreshChUtilWLAN, Low may be a WLAN channel utilization (BSS load) threshold used by the UE 104 for traffic steering to WLAN, and ThreshChUtilWLAN,High may be a WLAN channel utilization (BSS load) threshold used by the UE 104 for traffic steering to UTRAN. The WLAN channel utilization for an indicated WLAN identifier may correspond to a WLAN channel utilization value from basic service set (BSS) load information element (IE) obtained from IEEE 802.11 (Beacon or Probe Response) signaling for the indicated WLAN identifier.

In some embodiments, ThreshBackhRateDlWLAN, High corresponds to a backhaul available downlink bandwidth threshold used by the UE 104 for traffic steering to WLAN , and ThreshBackhRateDlWLAN, Low may be a backhaul available downlink bandwidth threshold used by the UE 104 for traffic steering to UTRAN. The backhaul available downlink bandwidth for the WLAN may be calculated as Downlink Speed* (1 - Downlink Load / 255), where the Downlink Speed and Downlink Load parameters may be drawn from wide area network (WAN) Metrics element obtained via access network query protocol (ANQP) signaling from Wi-Fi Alliance (WFA) hotspot (HS) 2.0 (based on IEEE 802.11u and WFA extensions).

In some embodiments, ThreshBackhRateUlWLAN, High may be a backhaul available uplink bandwidth threshold used by the UE 104 for traffic steering to WLAN, and ThreshBackhRateUlWLAN, Low may be a backhaul available uplink bandwidth threshold used by the UE 104 for traffic steering to UTRAN. The backhaul available uplink bandwidth that may be calculated as Uplink Speed * (1 - Uplink Load / 255), where the Uplink Speed and Uplink Load parameters may be drawn from the WAN metrics element obtained via ANQP signaling from WFA HS2.0,

In some embodiments, ThreshRSSIWLAN, High corresponds to a Beacon RSSI threshold used by the UE 104 for traffic steering to WLAN, and ThreshRSSIWLAN, Low may be a Beacon RSSI threshold used by the UE 104 for traffic steering to UTRAN. The Beacon RSSI for a WLAN may be an RSSI as measured by the UE 104 on the WLAN Beacon.

In some embodiments, the WLAN identifiers may identify target WLANs, for example the WLAN associated with the AP 124, to which traffic may be steered. The WLAN identifiers may include service set identifiers (SSIDs), basic service set identifiers (BSSIDs), and/or homogeneous extended service set identifiers (HHIDs). The traffic steering rules may be applicable to the target WLANs. In some embodiments, these traffic steering rules may only be applicable if the UE 104 is capable of traffic steering between UTRAN and WLAN and the UE 104 is not provisioned with active ANDSF policies as described above.

A first set of traffic steering rules may describe situations in which traffic may be steered from a UTRAN to a WLAN. These situations may be based on measured or otherwise obtained operational states in the UTRAN and the WLAN as compared to various thresholds provided in the RAN assistance parameters. In some embodiments, if the first set of traffic steering rules are met (e.g., for the time interval indicated by the timer value TsteeringWLAN), then an access stratum in the control circuitry 108 may indicate to upper layers of the control circuitry 108, for example, a non-access stratum, when and for which WLAN identifiers (out of a list of WLAN identifiers provided in the RAN access parameters) the first set of traffic steering rules have been met.

The control circuitry 108 (e.g., the upper layers of the control circuitry 108) may steer traffic from the UTRAN to the WLAN based on the indication that the conditions are satisfied. In some embodiments, the higher layers may ignore the indication provided by the access stratum if it contradicts user preferences or if the UE 104 is provisioned with active ANDSF policies.

The first set of traffic steering rules for steering traffic to a WLAN may include UTRAN serving cell conditions and target WLAN conditions. The EUTRAN serving cell conditions may include: Qrxlevmeas < ThreshServingOffloadWLAN, LowP; or Qqualmeas < ThreshServingOffloadWLAN, LowQ. The value Qrxlevmeas may be a received signal power of the UTRAN cell (e.g., the CPICH RSCP for an FDD cell or the P-CCPCH RSCP for a TDD cell). The value Qqualmeas may be a measured reference signal received quality (RSRQ) (in dB) in the UTRAN cell (e.g., the CPICH Ec/NO for an FDD cell). Thus, the control circuitry 108 may determine that the UTRAN serving cell conditions of the first set of traffic steering rules are satisfied if a measured received signal power value of the UTRAN cell is less than the corresponding received signal power threshold or a measured received signal quality value of the UTRAN is less than the corresponding received signal quality threshold. In some embodiments, the received signal power value and/or the received signal quality value may be measured by the UE 104.

The target WLAN conditions may include: ChannelUtilizationWLAN < ThreshChUtilWLAN, Low; BackhaulRateDlWLAN > ThreshBackhRateDlWLAN, High; BackhaulRateUlWLAN > ThreshBackhRateUlWLAN, High; and BeaconRSSI > ThreshRSSIWLAN, High, where ChannelUtilizationWLAN may be the WLAN channel utilization value from a BSS IE obtained from IEEE 802.11 (Beacon or Probe Response) signaling for an indicated WLAN identifier, BackhaulRateDlWLAN may be a backhaul available downlink bandwidth that may be calculated as Downlink Speed* (1 - Downlink Load / 255), where the Downlink Speed and Downlink Load parameters may be drawn from WAN Metrics element obtained via ANQP signaling from WFA HS 2.0 (based on IEEE 802.11u and WFA extensions), BackhaulRateUlWLAN may be a backhaul available uplink bandwidth that may be calculated as Uplink Speed * (1 - Uplink Load / 255), where the Uplink Speed and Uplink Load parameters may be drawn from the WAN metrics element obtained via ANQP signaling from WFA HS2.0, and BeaconRSSI may be an RSSI as measured by the UE 104 on the WLAN Beacon. Thus, the control circuitry 108 may determine that the WLAN conditions are satisfied if a WLAN channel utilization is less than the corresponding WLAN channel utilization threshold, a WLAN downlink backhaul rate is greater than a corresponding WLAN downlink backhaul rate threshold, a WLAN uplink backhaul rate is greater than a corresponding WLAN uplink backhaul rate threshold, and a beacon RSSI is greater than a corresponding WLAN beacon RSSI threshold.

In some embodiments, the UE 104 may receive only a subset of the thresholds discussed herein. In such embodiments, the control circuitry 108 of the UE 104 may exclude the evaluation of a measurement for which a corresponding threshold has not been provided. Accordingly, the network controller 148 may select the conditions that are to be used for traffic steering by selecting which thresholds to include in the RAN assistance parameters.

In an embodiment in which more than one target WLAN meets the conditions above, it may be up to the UE 104 to choose one of the available target WLANs. In some embodiments, each of the target WLANs may have an associated priority by which the UE 104 selects the WLAN with which to associate. The associated priority may be transmitted with the WLAN identifiers in the RAN assistance parameters. In other embodiments, the target WLANs may not have associated priorities, and the UE 104 may select one of the target WLANs based on one or more other considerations or at random.

A second set of the traffic steering rules may describe situations in which traffic may be steered from a WLAN to an UTRAN cell. Similar to the above discussion, these situations may be based on operational states in the WLAN and UTRAN cell as compared to various thresholds provided in the RAN assistance parameters. In some embodiments, if predefined conditions are met, then an access stratum in the control circuitry 108 may indicate to upper layers of the control circuitry 108, for example, a non-access stratum, when certain conditions for steering traffic from a WLAN to an EUTRAN cell are satisfied for a predetermined time interval, TsteeringWLAN. In some embodiments, the time interval used for traffic steering from the WLAN to the UTRAN may be the same as the time interval used for traffic steering from the UTRAN to the WLAN. In other embodiments, the RAN assistance parameters may include separate timer values to indicate respective time intervals for traffic steering to a UTRAN and for traffic steering to a WLAN. The control circuitry 108 (e.g., the upper layers of the control circuitry 108) may steer traffic from the WLAN to the UTRAN based on the indication that the conditions are satisfied. In some embodiments, the higher layers may ignore the indication provided by the access stratum if it contradicts user preferences or if the UE 104 is provisioned with ANDSF policies.

The second set of traffic steering rules for steering traffic to a WLAN may include WLAN conditions conditions and target UTRAN cell conditions. The WLAN conditions for steering traffic to a target UTRAN cell from the WLAN may include: ChannelUtilizationWLAN > ThreshChUtilWLAN, High; BackhaulRateDlWLAN < ThreshBackhRateDlWLAN, Low; BackhaulRateUlWLAN < ThreshBackhRateUlWLAN, Low; or BeaconRSSI < ThreshRSSIWLAN, Low. Thus, the control circuitry 108 may determine the WLAN conditions for steering traffic to the target UTRAN cell are satisfied if a WLAN channel utilization is greater than a corresponding WLAN channel utilization threshold, a WLAN downlink backhaul rate is less than a corresponding WLAN downlink backhaul rate threshold, a WLAN uplink backhaul rate is less than a corresponding WLAN uplink backhaul rate threshold, or a beacon RSSI is less than a corresponding WLAN beacon RSSI threshold.

The UTRAN conditions for steering traffic to a target UTRAN cell from a WLAN may include: Qrxlevmeas > ThreshServingOffloadWLAN, HighP; and Qqualmeas > ThreshServingOffloadWLAN, HighQ. Thus, the control circuitry 108 may determine the UTRAN conditions for steering traffic to the target UTRAN cell are satisfied if a measured received signal power value of the UTRAN is greater than a corresponding received signal power threshold and a measured received signal quality value of the UTRAN is greater than a corresponding received signal quality threshold.

As discussed above, the RAN assistance parameters may be included in a system information message (e.g., in one or more SIBs). In some embodiments, the RAN assistance parameters may be transmitted in SystemInformationBlockType23 and SystemInformationBlockType24. In one example, the various thresholds of the RAN assistance parameters may be included in SystemInformationBlockType23 and the list of target WLAN identifiers may be included in SystemInformationBlockType24. The SystemInformationBlockType23 and SystemInformationBlockType24 may have properties according to Table 1 below. In other embodiments, both the thresholds and the list of target WLAN identifiers may be included in SystemInformationBlockType23.

**Table 1**

| **System information block** | **Area scope** | **UE mode/state when block is valid** | **UE mode/state when block is read** | **Scheduling information** | **Modificatio n of system information** |
|---|---|---|---|---|---|
| System information block type 23 | Cell | Idle mode, CELL_FACH, CELL_PCH, URA_PCH | Idle mode, CELL_FACH, CELL_PCH, URA_PCH | Specified by the IE "Scheduling information" | Value tag |
| System information block type 24 | Cell | Idle mode, CELL_FACH, CELL_PCH, URA_PCH | Idle mode, CELL_FACH, CELL_PCH, URA_PCH, | Specified by the IE "Scheduling information" | Value tag |

In some embodiments, SystemInformationBlockType23 may contain parameters for traffic steering between UTRAN and WLAN as shown in Table 2.

| **Information Element/Group name** | **Need** | **Multi** | **Type and reference** | **Semantics description** | **Version** |
|---|---|---|---|---|---|
| CHOICE *WLAN Offload Parameters* | MP | | | | REL-12 |
| **>WLAN Offload Parameters Common** | | | **WLAN Offload Parameters 10.3.3.x1** | | **REL-12** |
| **>WLAN Offload Parameters Per PLMN List** | | **1 to 6** | | The number of instances of this IE is the number of instances of the IE "Multiple PLMNs" in the IE "Multiple PLMN List" of the MIB plus one. | **REL-12** |
| | | | | The first instance of this IE specifies the WLAN Offload Parameters for UEs which have chosen the PLMN in the IE "PLMN identity" of the MIB, the second instance specifies the WLAN Offload Parameters for UEs which have chosen the first PLMN in the IE "Multiple PLMNs" in the IE "Multiple PLMN List" of the MIB, the third instance specifies the WLAN Offload Parameters for UEs which have chosen the second PLMN in the IE "Multiple PLMNs" in the IE "Multiple PLMN List" of the MIB, and so on. | |
| **>>WLAN Offload Parameters** | **OP** | | **WLAN Offload Parameters 10.3.3.x1** | | **REL-12** |

In some embodiments, SystemInformationBlockType24 may contain the list of WLAN identifiers, as shown in Table 3.

**Table 3**

| **Information Element/Group name** | **Need** | **Multi** | **Type and reference** | **Semantics description** | **Version** |
|---|---|---|---|---|---|
| WLAN Identifiers Per PLMN List | | 1 to 6 | | The number of instances of this IE is the number of instances of the IE "Multiple PLMNs" in the IE "Multiple PLMN List" of the MIB plus one. | REL-12 |
| | | | | The first instance of this IE specifies the WLAN Identifiers for UEs which have chosen the PLMN in the IE "PLMN identity" of the MIB, the second instance specifies the WLAN Identifiers for UEs which have chosen the first PLMN in the IE "Multiple PLMNs" in the IE "Multiple PLMN List" of the MIB, the third instance specifies the WLAN Identifiers for UEs which have chosen the second PLMN in the IE "Multiple PLMNs" in the IE "Multiple PLMN List" of the MIB, and so on. | |
| >WLAN Identifiers | OP | | **WLAN Identifiers 10.3.3.x2** | | REL-12 |

The UE 104 may store all relevant IEs included in the system information blocks. If the UE 104 has active ANDSF policies, the UE 104 may provide the RAN assistance parameters for access network selection and traffic steering between the UTRAN and WLAN to the upper layers.

As discussed above, the RAN assistance parameters may additionally or alternatively be transmitted in a UTRAN mobility information message or a cell update confirm message. The UTRAN mobility information message may be used by the UTRAN to allocate a new RNTI and to convey other UTRAN mobility related information to the UE 104. The radio link control service access point (RLC-SAP) for the UTRAN mobility information message may be acknowledged mode (AM) or unacknowledged mode (UM). The UTRAN mobility information message may be transmitted from the UTRAN (e.g., the Node B 116) to the UE 104 on the dedicated control channel (DCCH) logical channel. The RAN assistance parameters may be optional elements of the UTRAN mobility information message. In embodiments, the UTRAN mobility information message may include the elements outlined in Table 4.

**Table 4**

| **Information Element/Group name** | **Need** | **Multi** | **Type and reference** | **Semantics description** | **Version** |
|---|---|---|---|---|---|
| Message Type | MP | | Message Type | | |

| **UE Information Elements** | | | | | |
|---|---|---|---|---|---|
| Integrity check info | CH | | Integrity check info 10.3.3.16 | | |
| RRC transaction identifier | MP | | RRC transaction identifier 10.3.3.36 | | |
| Integrity protection mode info | OP | | Integrity protection mode info 10.3.3.19 | The UTRAN should not include this IE unless it is performing an SRNS relocation | |
| Ciphering mode info | OP | | Ciphering mode info 10.3.3.5 | The UTRAN should not include this IE unless it is performing an SRNS relocation and a change in ciphering algorithm | |
| New U-RNTI | OP | | U-RNTI 10.3.3.47 | | |
| New C-RNTI | OP | | C-RNTI 10.3.3.8 | | |
| New H-RNTI | OP | | H-RNTI 10.3.3.14a | | REL-7 |
| New Primary E-RNTI | OP | | E-RNTI 10.3.3.10a | | REL-8 |
| UE Timers and constants in connected mode | OP | | UE Timers and constants in connected mode 10.3.3.43 | | |
| Dedicated priority information | OP | | Dedicated priority information 10.3.2.7 | | REL-8 |
| WLAN Offload Parameters | OP | | 10.3.3.xl | | REL-12 |
| WLAN Identifiers | OP | | 10.3.3.x2 | | REL-12 |

| **CN Information Elements** | | | | | |
|---|---|---|---|---|---|
| CN Information info | OP | | CN Information info full 10.3.1.3a | | |

| **UTRAN Information Elements** | | | | | |
|---|---|---|---|---|---|
| URA identity | OP | | URA identity 10.3.2.6 | | |
| RNC support for change of UE capability | OP | | Boolean | Should be included if the message is used to perform an SRNS relocation | REL-7 |

| **RB Information elements** | | | | | |
|---|---|---|---|---|---|
| Downlink counter synchronisation info | OP | | | | |
| >RB with PDCP information list | OP | 1 to <maxRBal 1RABs> | | | |
| >>RB with PDCP information | MP | | RB with PDCP information 10.3.4.22 | This IE is needed for each RB having PDCP in the case of lossless SRNS relocation | |
| | OP | | | | REL-5 |
| >>PDCP context relocation info | OP | | PDCP context relocation info 10.3.4.1a | This IE is needed for each RB having PDCP and performing PDCP context relocation | REL-5 |

The cell update confirm may confirm a cell update procedure and can be used to reallocate new RNTI information for the UE 104 that is valid in the new cell. The RLC-SAP for the cell update confirm message may be AM or UM. The cell update confirm message may be transmitted from the UTRAN (e.g., the Node B 116) to the UE 104 on the common control channel (CCCH) or the DCCH logical channels. The RAN assistance parameters may be optional elements of the cell update confirm message. In embodiments, the cell update confirm message may include the elements outlined in Table 5.

**Table 5**

| **Information Element/Group name** | **Need** | **Multi** | **Type and reference** | **Semantics description** | **Version** |
|---|---|---|---|---|---|
| Message Type | MP | | Message Type | | |

| **UE Information Elements** | | | | | |
|---|---|---|---|---|---|
| U-RNTI | *CV-CCCH* | | U-RNTI 10.3.3.47 | | |
| RRC transaction identifier | MP | | RRC transaction identifier 10.3.3.36 | | |
| Integrity check info | CH | | Integrity check info 10.3.3.16 | | |
| Integrity protection mode info | OP | | Integrity protection mode info 10.3.3.19 | The UTRAN should not include this IE unless it is performing an SRNS relocation or a cell reselection from GERAN *Iu mode* | |
| Ciphering mode info | OP | | Ciphering mode info 10.3.3.5 | The UTRAN should not include this IE unless it is performing either an SRNS relocation or a cell reselection from GERAN *Iu mode*, and a change in ciphering algorithm. | |
| Activation time | MD | | Activation time 10.3.3.1 | Default value is "now" | |
| New U-RNTI | OP | | U-RNTI 10.3.3.47 | | |
| New C-RNTI | OP | | C-RNTI 10.3.3.8 | | |
| New DSCH-RNTI | OP | | DSCH-RNTI 10.3.3.9a | Should not be set in FDD. If received, the UE behaviour is unspecified. | |
| New H-RNTI | OP | | H-RNTI 10.3.3.14a | | REL-5 |
| New Primary E-RNTI | OP | | E-RNTI 10.3.3.10a | | REL-6 |
| New Secondary E-RNTI | OP | | E-RNTI 10.3.3.10a | FDD only | REL-6 |
| RRC State Indicator | MP | | RRC State Indicator 10.3.3.35a | | |
| UTRAN DRX cycle length coefficient | OP | | UTRAN DRX cycle length coefficient 10.3.3.49 | | |
| Wait time | OP | | Wait time 10.3.3.50 | | |
| RLC re-establish indicator (RB2, RB3 and RB4) | MP | | RLC re-establish indicator 10.3.3.35 | Should not be set to TRUE if IE "Downlink counter synchronisation info" is included in message. | |
| RLC re-establish indicator (RB5 and upwards) | MP | | RLC re-establish indicator 10.3.3.35 | Should not be set to TRUE if IE "Downlink counter synchronisation info" is included in message. | |
| WLAN Offload Parameters | OP | | 10.3.3.x1 | | REL-12 |
| WLAN Identifiers | OP | | 10.3.3.x2 | | REL-12 |

| **CN Information Elements** | | | | | |
|---|---|---|---|---|---|
| CN Information info | OP | | CN Information info 10.3.1.3 | | |

| **UTRAN Information Elements** | | | | | |
|---|---|---|---|---|---|
| URA identity | OP | | URA identity 10.3.2.6 | | |
| RNC support for change of UE capability | OP | | Boolean | Should be included if the message is used to perform an SRNS relocation | REL-7 |

| **RB information elements** | | | | | |
|---|---|---|---|---|---|
| RAB information for setup | CV-*CS* | | RAB information for setup 10.3.4.10 | RAB identity shall be identical to the one currently configured and UE behaviour is unspecified otherwise. | |
| RB information to release list | OP | 1 to <maxRB> | | | |
| >RB information to release | MP | | RB information to release 10.3.4.19 | | |
| RB information to reconfigure list | OP | 1 to <maxRB> | | | |
| >RB information to reconfigure | MP | | RB information to reconfigure 10.3.4.18 | | |
| RB information to be affected list | OP | 1 to <maxRB> | | | |
| >RB information to be affected | MP | | RB information to be affected 10.3.4.17 | | |
| Downlink counter synchronisation info | OP | | | | |
| >RB with PDCP information list | OP | 1 to <maxRBal 1RABs> | | | |
| >>RB with PDCP information | MP | | RB with PDCP information 10.3.4.22 | This IE is needed for each RB having PDCP in the case of lossless SRNS relocation | |
| | OP | | | | REL-5 |
| >>PDCP context relocation info | OP | | PDCP context relocation info 10.3.4.1a | This IE is needed for each RB having PDCP and performing PDCP context relocation | REL-5 |
| PDCP ROHC target mode | OP | | PDCP ROHC target mode 10.3.4.2a | | REL-5 |

| **TrCH Information Elements** | | | | | |
|---|---|---|---|---|---|
| **Uplink transport channels** | | | | | |
| UL Transport channel information common for all transport channels | OP | | UL Transport channel information common for all transport channels 10.3.5.24 | | |
| Deleted TrCH information list | OP | 1 to <maxTrC H> | | | |
| >Deleted UL TrCH information | MP | | Deleted UL TrCH information 10.3.5.5 | | |
| Added or Reconfigured TrCH information list | OP | 1 to <maxTrC H> | | | |
| >Added or Reconfigured UL TrCH information | MP | | Added or Reconfigure d UL TrCH information 10.3.5.2 | | |

| **Downlink transport channels** | | | | | |
|---|---|---|---|---|---|
| DL Transport channel information common for all transport channels | OP | | DL Transport channel information common for all transport channels 10.3.5.6 | | |
| Deleted TrCH information list | OP | 1 to <maxTrC H> | | | |
| >Deleted DL TrCH information | MP | | Deleted DL TrCH information 10.3.5.4 | | |
| Added or Reconfigured TrCH information list | OP | 1 to <maxTrC H> | | | |
| >Added or Reconfigured DL TrCH information | MP | | Added or Reconfigure d DL TrCH information 10.3.5.1 | | |

| **PhyCH information elements** | | | | | |
|---|---|---|---|---|---|
| Frequency info | OP | | Frequency info 10.3.6.36 | | |
| Multi-frequency Info | OP | | Multi-frequency Info 10.3.6.39a | This IE is used for 1.28 Mcps TDD only | REL-7 |
| DTX-DRX timing information | OP | | DTX-DRX timing information 10.3.6.34b | | REL-7 |
| DTX-DRX Information | OP | | DTX-DRX Information 10.3.6.34a | | REL-7 |
| HS-SCCH less Information | OP | | HS-SCCH less Information 10.3.6.36ab | | REL-7 |
| MIMO parameters | OP | | MIMO parameters 10.3.6.41a | | REL-7 |
| MIMO mode with four transmit antennas parameters | OP | | MIMO mode with four transmit antennas parameters 10.3.6.142 | | REL-11 |
| Control Channel DRX information | OP | | Control Channel DRX information 1.28 Mcps TDD 10.3.6.107 | This IE is used for 1.28 Mcps TDD only | REL-8 |
| SPS Information | OP | | SPS information 1.28 Mcps TDD 10.3.6.110 | This IE is used for 1.28 Mcps TDD only | REL-8 |
| MU-MIMO info | OP | | MU-MIMO info 1.28 Mcps TDD 10.3.6.122 | This IE is used for 1.28 Mcps TDD only | REL-10 |
| Non-rectangular resource allocation indicator | OP | | Enumerated( TRUE) | For 1.28 Mcps TDD only. The absence of this IE indicates that the non-rectangular resource allocation is not used. | REL-12 |
| Non-rectangular resource specific timeslots set | *CV-Non-rectangula rResource Allocation* | | Bit string (7) | For 1.28 Mcps TDD only. The value 1 of a bit indicates the corresponding timeslot in which the channelization codes are assigned by physical control channel. The value 0 of a bit indicates the corresponding timeslot in which all channelization codes are assigned when the timeslot is scheduled to the UE. The first/leftmost bit of the bit string is for TS0. | REL-12 |

| **Uplink radio resources** | | | | | |
|---|---|---|---|---|---|
| Maximum allowed UL TX power | MD | | Maximum allowed UL TX power 10.3.6.39 | Default value is the existing maximum UL TX power | |
| Uplink DPCH info | OP | | Uplink DPCH info 10.3.6.88 | | |
| E-DCH Info | OP | | E-DCH Info 10.3.6.97 | | REL-6 |
| Uplink secondary cell info FDD | OP | | Uplink secondary cell info FDD 10.3.6.115 | FDD only | REL-9 |
| Multi-carrier E-DCH Info for LCR TDD | OP | | Multi-carrier E-DCH Info for LCR TDD 10.3.6.97a | 1.28Mcps TDD only | REL-10 |
| Uplink CLTD info FDD | OP | | Uplink CLTD info FDD 10.3.6.125 | FDD only | REL-11 |
| Uplink OLTD info FDD | OP | | Uplink OLTD info FDD 10.3.6.126 | FDD only | REL-11 |

| **Downlink radio resources** | | | | | |
|---|---|---|---|---|---|
| Downlink HS-PDSCH Information | OP | | Downlink HS_PDSCH Information 10.3.6.23a | | REL-5 |
| Downlink information common for all radio links | OP | | Downlink information common for all radio links 10.3.6.24 | | |
| Downlink information per radio link list | OP | 1 to <maxRL> | | Send downlink information for each radio link to be set-up | |
| >Downlink information for each radio link | MP | | Downlink information for each radio link 10.3.6.27 | | |
| Downlink secondary cell info FDD | OP | | Downlink secondary cell info FDD 10.3.6.31a | FDD only | REL-8 |
| Additional downlink secondary cell info list FDD | OP | 2 | | | REL-10 |
| >Downlink secondary cell info FDD | OP | | Downlink secondary cell info FDD 10.3.6.31a | FDD only | REL-10 |
| Additional downlink secondary cell info list FDD 2 | OP | 4 | | | REL-11 |
| >Downlink secondary cell info FDD | OP | | Downlink secondary cell info FDD 10.3.6.31a | FDD only | REL-11 |
| Common E-RGCH info FDD | OP | | Common E-RGCH info FDD 10.3.6.138 | FDD only | REL-11 |
| MBMS PL Service Restriction Information | OP | | Enumerated (TRUE) | | REL-6 |
| CELL_DCH measurement occasion info LCR | OP | | CELL_DCH measuremen t occasion info LCR 10.3.7.126 | | REL-9 |

The cell update confirm message may be subject to the conditions outlined in Table 6.

**Table 6**

| **Condition** | **Explanation** |
|---|---|
| *CCCH* | This IE is mandatory present when CCCH is used and ciphering is not required and not needed otherwise. |
| *CS* | This IE is optionally present only if CS domain RAB mapping is reconfigured between DCH and E-DCH/HS-DSCH and shall not be present otherwise. |
| *Non-rectangularResourceAllocation* | This IE is optionally present if non-rectangular resource allocation is configured. Otherwise, it is not needed. |

The RAN assistance parameters included in the system information message, the UTRAN mobility information message, and/or the cell update confirm message may have properties as described in Table 7. The "type and reference" column may indicate the size and/or number of possible values that are indicated by the corresponding threshold. Each of the thresholds may be optionally included (or not included) in the corresponding message.

**Table 7**

| **Information Element/Group name** | **Need** | **Multi** | **Type and reference** | **Semantics description** | **Version** |
|---|---|---|---|---|---|
| Thresh_{ServingOffloadWLAN, LowP} | **OP** | | **Integer (0..62 by step of 2** | **RSCP, dB** | **REL-12** |
| Thresh_{ServingOffioadWLAN, HighP} | **OP** | | **Integer (0..62 by step of 2** | **RSCP, dB** | **REL-12** |
| Thresh_{ServingOffloadWLAN, LowQ} | **OP** | | **Integer (0..31)** | **Ec/NO, dB** | **REL-12** |
| Thresh_{ServingOffloadWLAN, HighQ} | **OP** | | **Integer (0..31)** | **Ec/NO, dB** | **REL-12** |
| Thresh_{ChUtilWLAN, Low} | **OP** | | **Integer (1...255)** | | **REL-12** |
| Thresh_{ChUtilwLAN, High} | **OP** | | **Integer (1...255)** | | **REL-12** |
| Thresh_{BackhRateDLWLAN, Low} | **OP** | | **Integer (1...4194304)** | | **REL-12** |
| Thresh_{BackhRateDLWLAN, High} | **OP** | | **Integer (1...4194304)** | | **REL-12** |
| Thresh_{BackhRateULWLAN, Low} | **OP** | | **Integer (1...4194304)** | | **REL-12** |
| Thresh_{BackhRateULWLAN, High} | **OP** | | **Integer (1...4194304)** | | **REL-12** |
| Tsteering_{WLAN} | **OP** | | **Integer (0..31)** | | **REL-12** |

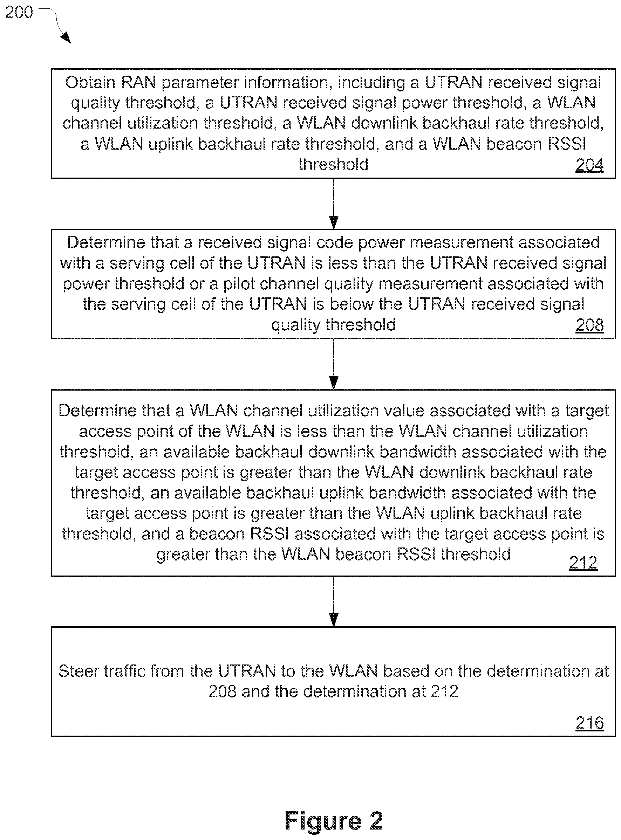

Figure 2 illustrates a method 200 for traffic steering from a UTRAN to a WLAN that may be performed by a UE (e.g., UE 104) in accordance with various embodiments. In some embodiments, the UE may include or have access to one or more non-transitory computer-readable media having instructions, stored thereon, that when executed cause the UE to perform the method 200.

At 204 of the method 200, the UE may obtain RAN assistance parameters. The RAN assistance parameters may be obtained, for example, from a system broadcast message, a cell update confirm message, or a UTRAN mobility information message. The RAN assistance parameters may include a UTRAN received signal quality threshold, a UTRAN received signal power threshold, a WLAN channel utilization threshold, a WLAN downlink backhaul rate threshold, a WLAN uplink backhaul rate threshold, and a WLAN beacon RSSI threshold.

At 208 of the method 200, the UE may determine that a received signal code power measurement associated with a serving cell of the UTRAN is less than the UTRAN received signal power threshold or a pilot channel quality measurement associated with the serving cell of the UTRAN is below the UTRAN received signal quality threshold.

At 212 of the method 200, the UE may determine that a WLAN channel utilization value associated with a target access point of the WLAN is less than the WLAN channel utilization threshold, an available backhaul downlink bandwidth associated with the target access point is greater than the WLAN downlink backhaul rate threshold, an available backhaul uplink bandwidth associated with the target access point is greater than the WLAN uplink backhaul rate threshold, and a beacon RSSI associated with the target access point is greater than the WLAN beacon RSSI threshold.

At 216 of the method 200, the UE may steer traffic from the UTRAN to the WLAN based on the determination at 208 and the determination at 212.

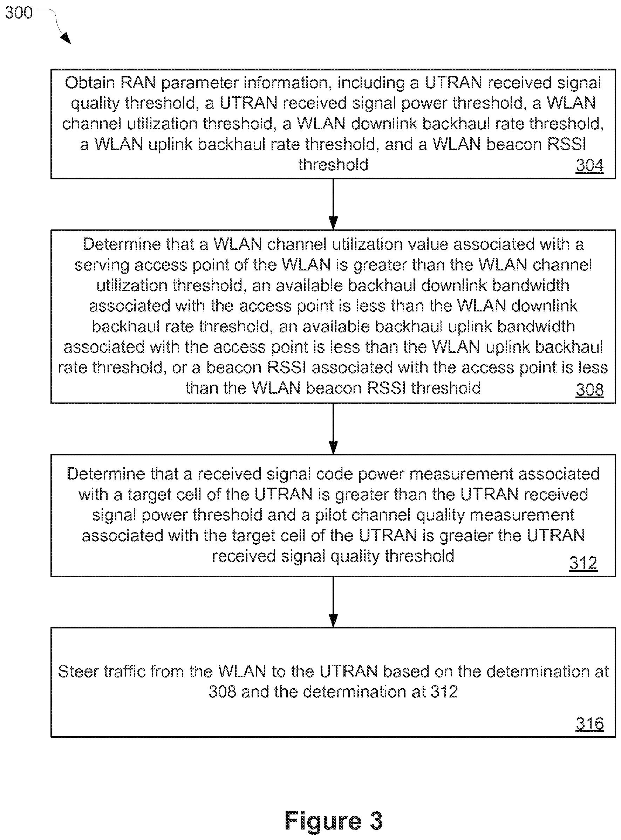

Figure 3 illustrates a method 300 for traffic steering from a WLAN to a UTRAN that may be performed by a UE (e.g., UE 104) in accordance with various embodiments. In some embodiments, the UE may include or have access to one or more non-transitory computer-readable media having instructions, stored thereon, that when executed cause the UE to perform the method 200.

At 304 of the method 300, the UE may obtain RAN assistance parameters. The RAN assistance parameters may be obtained, for example, from a system broadcast message, a cell update confirm message, or a UTRAN mobility information message. The RAN assistance parameters may include a UTRAN received signal quality threshold, a UTRAN received signal power threshold, a WLAN channel utilization threshold, a WLAN downlink backhaul rate threshold, a WLAN uplink backhaul rate threshold, and a WLAN beacon RSSI threshold.

At 308 of the method 300, the UE may determine that a WLAN channel utilization value associated with a serving access point of the WLAN is greater than the WLAN channel utilization threshold, an available backhaul downlink bandwidth associated with the access point is less than the WLAN downlink backhaul rate threshold, an available backhaul uplink bandwidth associated with the access point is less than the WLAN uplink backhaul rate threshold, or a beacon RSSI associated with the access point is less than the WLAN beacon RSSI threshold.

At 312 of the method 300, the UE may determine that a received signal code power measurement associated with a target cell of the UTRAN is greater than the UTRAN received signal power threshold and a pilot channel quality measurement associated with the target cell of the UTRAN is greater the UTRAN received signal quality threshold.

At 316 of the method 300, the UE may steer traffic from the WLAN to the UTRAN based on the determination at 308 and the determination at 312.

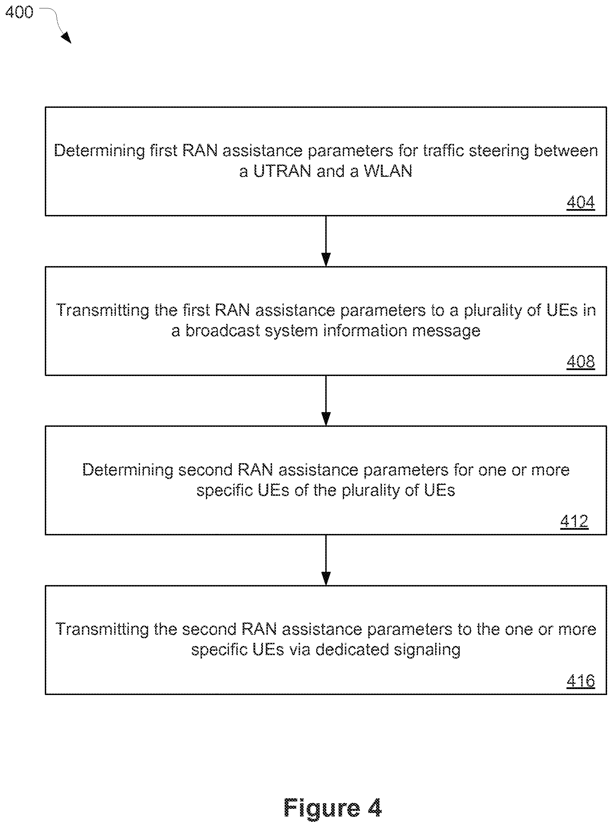

Figure 4 illustrates a method 400 for managing traffic steering that may be performed by a network node in accordance with various embodiments. For example, the method 400 may be performed by a radio network controller (RNC, e.g., network controller 148) of a UTRAN. In some embodiments, the network node may include or have access to one or more non-transitory computer-readable media having instructions, stored thereon, that when executed cause the network node to perform the method 400.

At 404, the method 400 may include determining first RAN assistance parameters for traffic steering between a UTRAN and a WLAN. In some embodiments, the first RAN assistance parameters may include a first set of thresholds for the UE to use to steer traffic from the UTRAN to a WLAN, and a second set of thresholds for the UE to use to steer traffic from the WLAN to the UTRAN, wherein the second set of thresholds is different from the first set of thresholds. In some embodiments, the network node may receive one of more of the RAN assistance parameters from another network node. For example, the RNC may receive the WLAN identifiers from an operations, administration, and maintenance (OAM) system.

At 408, the method 400 may include transmitting the first RAN assistance parameters to a plurality of UEs in a broadcast system information message. For example, the first RAN assistance parameters may be included in one or more system information blocks of the system information message.

At 412, the method 400 may include determining second RAN assistance parameters for one or more specific UEs of the plurality of UEs.

At 416, the method 400 may include transmitting the second RAN assistance parameters to the one or more specific UEs via dedicated signaling. For example, the second RAN assistance parameters may be included in a UTRAN mobility information message or a cell update confirm message.

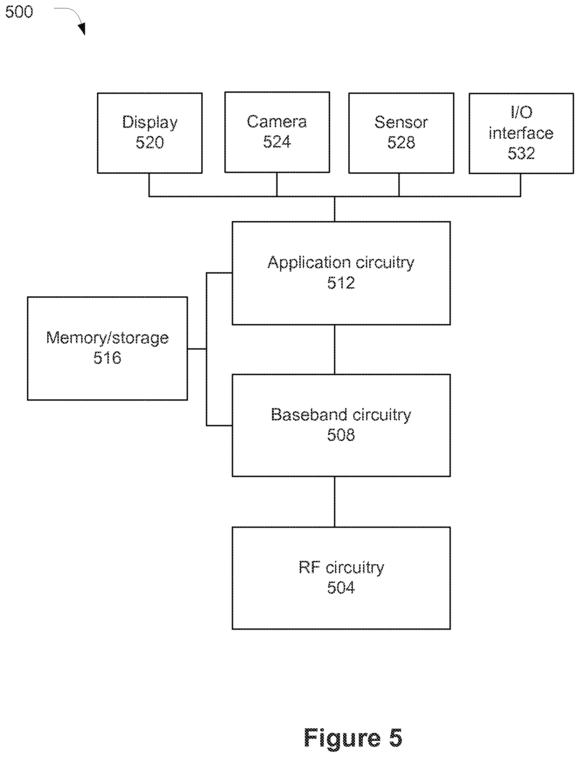

The UE 104, Node B 116, or network controller 148 as described herein may be implemented into a system using any suitable hardware, firmware, or software configured as desired. Figure 5 illustrates, for one embodiment, an example system 500 comprising radio frequency (RF) circuitry 504, baseband circuitry 508, application circuitry 512, memory/storage 516, display 520, camera 524, sensor 528, input/output (I/O) interface 532, or network interface 536 coupled with each other as shown.

The application circuitry 512 may include circuitry such as, but not limited to, one or more single-core or multi-core processors. The processor(s) may include any combination of general-purpose processors and dedicated processors (e.g., graphics processors, application processors, etc.). The processors may be coupled with memory/storage 516 and configured to execute instructions stored in the memory/storage 516 to enable various applications or operating systems running on the system 500.

The baseband circuitry 508 may include circuitry such as, but not limited to, one or more single-core or multi-core processors such as, for example, a baseband processor. The baseband circuitry 508 may handle various radio control functions that enable communication with one or more radio access networks via the RF circuitry 504. The radio control functions may include, but are not limited to, signal modulation, encoding, decoding, radio frequency shifting, etc. In some embodiments, the baseband circuitry 508 may provide for communication compatible with one or more radio technologies. For example, in some embodiments, the baseband circuitry 508 may support communication with an EUTRAN or other wireless metropolitan area networks (WMAN), a wireless local area network (WLAN), or a wireless personal area network (WPAN). Embodiments in which the baseband circuitry 508 is configured to support radio communications of more than one wireless protocol may be referred to as multi-mode baseband circuitry.

In various embodiments, baseband circuitry 508 may include circuitry to operate with signals that are not strictly considered as being in a baseband frequency. For example, in some embodiments, baseband circuitry 508 may include circuitry to operate with signals having an intermediate frequency, which is between a baseband frequency and a radio frequency.

In some embodiments, the control circuitry 108 or 140, or the management circuitry 156 may be embodied in the application circuitry 512 or the baseband circuitry 508.

RF circuitry 504 may enable communication with wireless networks using modulated electromagnetic radiation through a non-solid medium. In various embodiments, the RF circuitry 504 may include switches, filters, amplifiers, etc., to facilitate the communication with the wireless network.

In various embodiments, RF circuitry 504 may include circuitry to operate with signals that are not strictly considered as being in a radio frequency. For example, in some embodiments, RF circuitry 504 may include circuitry to operate with signals having an intermediate frequency, which is between a baseband frequency and a radio frequency.

In some embodiments, the UMTS radio 112, the WLAN radio 120, or the wireless transceiver 136 may be embodied in the RF circuitry 504.

In some embodiments, some or all of the constituent components of the baseband circuitry 508, the application circuitry 512, or the memory/storage 516 may be implemented together on a system on a chip (SOC).

Memory/storage 516 may be used to load and store data or instructions, for example, for system 500. Memory/storage 516 for one embodiment may include any combination of suitable volatile memory (e.g., dynamic random access memory (DRAM)) or non-volatile memory (e.g., Flash memory).

In various embodiments, the I/O interface 532 may include one or more user interfaces designed to enable user interaction with the system 500 or peripheral component interfaces designed to enable peripheral component interaction with the system 500. User interfaces may include, but are not limited to, a physical keyboard or keypad, a touchpad, a speaker, a microphone, etc. Peripheral component interfaces may include, but are not limited to, a non-volatile memory port, a universal serial bus (USB) port, an audio jack, and a power supply interface.

In various embodiments, sensor 528 may include one or more sensing devices to determine environmental conditions or location information related to the system 500. In some embodiments, the sensors may include, but are not limited to, a gyro sensor, an accelerometer, a proximity sensor, an ambient light sensor, and a positioning unit. The positioning unit may also be part of, or interact with, the baseband circuitry 508 or RF circuitry 504 to communicate with components of a positioning network, e.g., a global positioning system (GPS) satellite. In various embodiments, the display 520 may include a display (e.g., a liquid crystal display, a touch screen display, etc.). In various embodiments, the network interface 536 may include circuitry to communicate over one or more wired networks. The transceiver 144 or 152 may be embodied in the network interface 536. In various embodiments, the system 500 may be a mobile computing device such as, but not limited to, a laptop computing device, a tablet computing device, a netbook, an ultrabook, a smartphone, etc.; or a network node, e.g., an eNB or network controller. In various embodiments, system 500 may have more or fewer components, or different architectures.

## Claims

1. An apparatus to be employed by a user equipment (104), UE, the apparatus comprising:
a Universal Mobile Telecommunications System, UMTS, radio (112) to communicate via a universal terrestrial radio access network, UTRAN;
a wireless local area network, WLAN, radio (120) to communicate via a WLAN; control circuitry (108) coupled with the UMTS radio and the WLAN radio, the control circuitry configured to:
obtain, via broadcast signaling, first radio access network, RAN, assistance parameters including one or more thresholds for traffic steering between the UTRAN and the WLAN;
**characterized in that** the control circuitry is further configured to:
obtain, via dedicated signaling on a serving cell of the UTRAN, second RAN assistance parameters for traffic steering between the UTRAN and the WLAN;
wherein, if the UE is in a CELL DCH state with the serving cell of the UTRAN, the control circuitry is further configured to:
apply the second RAN assistance parameters to steer traffic between the UMTS radio and the WLAN radio while the UE is in the CELL DCH state with the serving cell;
continue to use the second RAN assistance parameters upon handover from the serving cell to a target cell of the UTRAN that is included in a same serving radio network subsystem, SRNS, as the serving cell; and
upon a SRNS relocation for the UE, discard the second RAN assistance parameters and apply the first RAN assistance parameters to steer traffic between the UMTS radio and the WLAN radio;
wherein, if the UE is in the CELL FACH state with the serving cell of the UTRAN, the control circuitry is further configured to:
apply the second RAN assistance parameters to steer traffic between the UMTS radio and the WLAN radio; and
discard the second RAN assistance parameters upon cell reselection and apply the first RAN assistance parameters to steer the traffic between the UMTS radio and the WLAN radio.

2. The apparatus of claim 1,
wherein the RAN assistance parameters further include one or more WLAN identifiers to identify WLAN access points that are available to the UE for traffic steering.

3. The apparatus of claim 2,
wherein the control circuitry is further configured to:
start a timer upon entering an idle mode, a CELL_PCH state, or a URA_PCH state in the UTRAN;
determine that the timer has expired; and
based on the determination, discard the second RAN assistance parameters and use the first RAN assistance parameters to steer traffic between the UMTS radio and the WLAN radio.

4. The apparatus of any one of claims 1 to 3, wherein the one or more thresholds of the first RAN assistance parameters include a first WLAN beacon received signal strength indication, RSSI, threshold and a second WLAN beacon RSSI threshold that has a lesser value than the first WLAN beacon RSSI threshold, and wherein the control circuitry is configured to:
steer traffic from the UTRAN to the WLAN based on the first WLAN beacon RSSI threshold; and
steer traffic from the WLAN to the UTRAN based on the second WLAN beacon RSSI threshold.

5. The apparatus of any one of claims 1 to 3, wherein the one or more thresholds of the first RAN assistance parameters include a UTRAN received signal quality threshold, a UTRAN received signal power threshold, a WLAN channel utilization threshold, a WLAN downlink backhaul rate threshold, and a WLAN uplink backhaul rate threshold, and wherein, to apply the first RAN assistance parameters to steer traffic between the UMTS radio and the WLAN radio, the control circuitry is configured to:
determine that:
a received signal code power measurement associated with a serving cell of the UTRAN is less than the UTRAN received signal power threshold or a pilot channel quality measurement associated with the serving cell of the UTRAN is below the UTRAN received signal quality threshold; and
a WLAN channel utilization value associated with a target access point of the WLAN is less than the WLAN channel utilization threshold, an available backhaul downlink bandwidth associated with the target access point is greater than the WLAN downlink backhaul rate threshold, and an available backhaul uplink bandwidth associated with the target access point is greater than the WLAN uplink backhaul rate threshold; and
steer traffic from the UTRAN to the WLAN based on the determination.

6. The apparatus of claim 5, wherein the UTRAN received signal quality threshold, the UTRAN received signal power threshold, the WLAN channel utilization threshold, the WLAN downlink backhaul rate threshold, and the WLAN uplink backhaul rate threshold are different than corresponding thresholds used by the control circuitry to steer traffic from the WLAN to the UTRAN; or
wherein the one or more thresholds of the first RAN assistance parameters include a UTRAN received signal quality threshold, a UTRAN received signal power threshold, a WLAN channel utilization threshold, a WLAN downlink backhaul rate threshold, and a WLAN uplink backhaul rate threshold, and wherein, to apply the first RAN assistance parameters to steer traffic between the UMTS radio and the WLAN radio, the control circuitry is further configured to:
determine that:
a WLAN channel utilization value associated with a serving access point of the WLAN is greater than the WLAN channel utilization threshold, an available backhaul downlink bandwidth associated with the serving access point is less than the WLAN downlink backhaul rate threshold, or an available backhaul uplink bandwidth associated with the serving access point is less than the WLAN uplink backhaul rate threshold; and
a received signal code power measurement associated with a target cell of the UTRAN is greater than the UTRAN received signal power threshold and a pilot channel quality measurement associated with the target cell of the UTRAN is greater than the UTRAN received signal quality threshold; and
steer traffic from the WLAN to the UTRAN based on the determination.

7. A system comprising an apparatus according to any of claims 1-6 and an apparatus to be employed by a network controller (148) of a universal terrestrial radio access network, UTRAN, the apparatus to be employed by a network controller comprising:
transceiver circuitry to communicate with a user equipment, UE, via the UTRAN; management circuitry coupled to the transceiver circuitry, the management circuitry configured to:
transmit, via the transceiver circuitry, via broadcast signaling, first radio access network, RAN, assistance parameters that include one or more thresholds for traffic steering between the UTRAN and a wireless local area network, WLAN;
wherein the management circuitry is further configured to:
transmit, via the transceiver circuitry using dedicated signaling on a serving cell of the UTRAN, second RAN assistance parameters;
wherein, if the UE is in a CELL DCH state with the serving cell of the UTRAN, the second RAN assistance parameters are to be used by the UE to steer traffic between the UMTS radio and the WLAN radio while the UE is in the CELL DCH state with the serving cell;
wherein the second RAN assistance parameters are to be discarded upon a SRNS relocation for the UE;
wherein, if the UE is in the CELL FACH state with the serving cell of the UTRAN, the second RAN assistance parameters are to be used by the UE to steer traffic between the UMTS radio and the WLAN radio;
wherein the second RAN assistance parameters are to be used by the UE instead of the first RAN assistance parameters after handover from the serving cell to a target cell of the UTRAN that is included in the SRNS if the UE is in the CELL_DCH state; and
wherein the first RAN assistance parameters are to be used by the UE instead of the second RAN assistance parameters if the UE performs cell reselection and the UE is in the CELL_FACH state.

8. The system of claim 7, wherein the one or more thresholds of the first RAN assistance parameters include a first set of thresholds for the UE to use to steer traffic from the UTRAN to the WLAN, and a second set of thresholds for the UE to use to steer traffic from the WLAN to the UTRAN, wherein the second set of thresholds is different from the first set of thresholds, wherein the first set of thresholds includes a low UTRAN received signal quality threshold, a low UTRAN received signal power threshold, a low WLAN channel utilization threshold, a high WLAN downlink backhaul rate threshold, and a high WLAN uplink backhaul rate threshold, and wherein the second set of thresholds includes a high UTRAN received signal quality threshold, a high UTRAN received signal power threshold, a high WLAN channel utilization threshold, a low WLAN downlink backhaul rate threshold, and a low WLAN uplink backhaul rate threshold.

9. The system of claim 8, wherein the first set of thresholds further includes a high WLAN beacon received signal strength indicator, RSSI, threshold, and wherein the second set of thresholds further includes a low WLAN beacon RSSI threshold.

10. The system of any one of claims 7 to 9, wherein the management circuitry is further configured to transmit, to the UE via the transceiver circuitry, one or more WLAN identifiers to identify one or more WLAN access points that are available to the UE for traffic steering; or
wherein the second RAN assistance parameters are included in the cell update confirm message; or
wherein the management circuitry is further configured to determine values for thresholds of the first set of thresholds and the second set of thresholds; or
wherein the network controller is a Node B or a radio network controller, RNC, of the UTRAN.

11. One or more non-transitory, computer-readable media having instructions, stored thereon, that when executed cause a user equipment, UE, to:
obtain, via broadcast signaling on a universal terrestrial radio access network, UTRAN, first radio access network, RAN, assistance parameters for traffic steering between the UTRAN and a wireless local area network, WLAN;
**characterized in that** the instructions, when executed, further cause the UE to:
obtain, via dedicated signaling on a serving cell of the UTRAN, second RAN assistance parameters for traffic steering between the UTRAN and the WLAN;
if the UE is in a CELL_DCH state, apply the second RAN assistance parameters to steer traffic between the UTRAN and the WLAN, continue to use the second RAN assistance parameters upon handover from the serving cell to a target cell of the plurality of cells that is in a same serving radio network subsystem, SRNS, of the UTRAN, and discard the second RAN assistance parameters upon a SRNS relocation;
if the UE is in the CELL_FACH state with the serving cell of the UTRAN, apply the second RAN assistance parameters to steer traffic between the UMTS and the WLAN, and discard the second RAN assistance parameters upon cell reselection.

12. The one or more media of claim 11, wherein the instructions, when executed, further cause the UE to:
start a timer upon entering a UTRAN idle mode, a UTRAN cell paging channel, CELL_PCH, state, or a UTRAN registration area paging channel, URA_PCH, state; determine whether the timer has expired;
when it is determined that the timer has not expired, use the second RAN assistance parameters to steer traffic between the UMTS and the WLAN; and
when it is determined that the timer has expired, discard the second RAN assistance parameters and use the first RAN assistance parameters to steer traffic between the UMTS and the WLAN.

13. The one or more media of claim 11, wherein the second RAN assistance parameters include a first WLAN beacon received signal strength indication, RSSI, threshold and a second WLAN beacon RSSI threshold that has a lesser value than the first WLAN beacon RSSI threshold, and wherein the instructions, when executed, further cause the UE to:
steer traffic from the UTRAN to the WLAN based on the first WLAN beacon RSSI threshold; and
steer traffic from the WLAN to the UTRAN based on the second WLAN beacon RSSI threshold.

14. The one or more media of claim 13, wherein the RAN assistance parameters further include one or more WLAN identifiers to identify WLAN access points that are available to the UE for traffic steering.

## Patentansprüche

1. Vorrichtung, die von einer Benutzervorrichtung (104), UE, verwendet werden soll, wobei die Vorrichtung umfasst:
ein Universal-Mobile-Telecommunications-System-UMTS-Funkgerät (112), um über ein universelles terrestrisches Funkzugangsnetz, UTRAN, zu kommunizieren;
ein drahtloses lokales Netzwerk, WLAN, Funkgerät (120), um über ein WLAN zu kommunizieren;
eine Steuerschaltung (108), die mit dem UMTS-Funkgerät und dem WLAN-Funkgerät gekoppelt ist, wobei die Steuerschaltung konfiguriert ist zum:
Erhalten, über Rundsignalisierung, von ersten Funkzugangsnetz-, RAN-, Unterstützungsparameter einschließlich eines oder mehrerer Schwellenwerte für die Verkehrslenkung zwischen dem UTRAN und dem WLAN;
**dadurch gekennzeichnet, dass** die Steuerschaltung ferner konfiguriert ist zum:
Erhalten, über eine dedizierte Signalisierung auf einer bedienenden Zelle des UTRAN, von zweiten RAN-Unterstützungsparametern für die Lenkung des Verkehrs zwischen dem UTRAN und dem WLAN;
wobei, wenn sich die UE in einem CELL-DCH-Zustand mit der bedienenden Zelle des UTRAN befindet, die Steuerschaltung ferner konfiguriert ist zum:
Anwenden der zweiten RAN-Unterstützungsparameter, um Verkehr zwischen dem UMTS-Funkgerät und dem WLAN-Funkgerät zu lenken, während sich die UE in dem CELL-DCH-Zustand mit der bedienenden Zelle ist;
Weiterverwenden der zweiten RAN-Unterstützungsparametern bei einer Übergabe von der bedienenden Zelle an einer Zielzelle des UTRAN, die in dem gleichen bedienenden Funknetzsubsystem, SRNS, der bedienenden Zelle beinhalten ist; und
bei einer SRNS-Verlegung für die UE, Verwerfen der zweiten RAN-Unterstützungsparametern und Anwenden der ersten RAN-Unterstützungsparametern, um den Verkehr zwischen dem UMTS-Funkgerät und dem WLAN-Funkgerät zu lenken;
wobei, wenn sich die UE in dem CELL-FACH-Zustand mit der bedienenden Zelle des UTRAN befindet, die Steuerschaltung ferner konfiguriert ist zum:
Anwenden der zweiten RAN-Unterstützungsparametern, um den Verkehr zwischen dem UMTS-Funkgerät und dem WLAN-Funkgerät; und
Verwerfen der zweiten RAN-Unterstützungsparameter bei Zellenneuauswahl und Anwenden der ersten RAN-Unterstützungsparameter, um den Verkehr zwischen dem UMTS-Funkgerät und dem WLAN- Funkgerät zu lenken.

2. Vorrichtung nach Anspruch 1,
wobei die RAN-Unterstützungsparameter ferner einen oder mehrere WLAN-Identifikatoren beinhalten, um WLAN-Zugangspunkte zu identifizieren, die für die UE für die Verkehrslenkung verfügbar sind.

3. Vorrichtung nach Anspruch 2,
wobei die Steuerschaltung ferner konfiguriert ist zum:
Starten eines Timers bei dem Eintritt in einen Leerlaufmodus, einen CELL_PCH-Zustand oder einen URA_PCH-Zustand in dem UTRAN;
Bestimmen, dass der Timer abgelaufen ist; und
basierend auf der Bestimmung, die zweiten RAN-Unterstützungsparameter verwerfen und die ersten RAN-Unterstützungsparameter verwenden, um den Verkehr zwischen dem UMTS-Funkgerät und dem WLAN-Funkgerät zu lenken.

4. Vorrichtung nach einem der Ansprüche 1 bis 3, wobei der eine oder die mehreren Schwellenwerte der ersten RAN-Unterstützungsparameter einen ersten WLAN-Baken-Empfangssignalstärkeindikator, RSSI, Schwellenwert und einen zweiten WLAN-Baken-RSSI-Schwellenwert, der einen geringeren Wert als der erste WLAN-Baken-RSSI-Schwellenwert hat, umfassen, und wobei die Steuerschaltung konfiguriert ist zum:
Lenken des Verkehrs von dem UTRAN zu dem WLAN basierend auf dem ersten WLAN-Baken-RSSI-Schwellenwert; und
Lenken des Verkehrs von dem WLAN zu dem UTRAN basierend auf dem zweiten WLAN-Baken-RSSI-Schwellenwert.

5. Vorrichtung nach einem der Ansprüche 1 bis 3, wobei der eine oder die mehreren Schwellenwerte der ersten RAN-Unterstützungsparameter einen UTRAN-Empfangssignalqualitätsschwellenwert, einen UTRAN-Empfangssignalleistungsschwellenwert, einen WLAN-Kanalauslastungsschwellenwert, einen WLAN-Downlink-Rückholratenschwellenwert und einen WLAN-Uplink-Rückholratenschwellenwert umfassen, und wobei, um die ersten RAN-Unterstützungsparameter anzuwenden, um Verkehr zwischen dem UMTS-Funkgerät und dem WLAN-Funkgerät zu lenken, die Steuerschaltung konfiguriert ist zum:
Bestimmen, dass:
ein Messwert für die empfangene Signalcodeleistung, der einer bedienenden Zelle des UTRAN zugeordnet ist, kleiner als der UTRAN-Schwellenwert für die empfangene Signalleistung ist oder ein Messwert für die Pilotkanalqualität, der der bedienenden Zelle des UTRAN zugeordnet ist, unter dem UTRAN-Schwellenwert für die empfangene Signalqualität liegt; und
ein WLAN-Kanalauslastungswert, der einem Zielzugangspunkt des WLAN zugeordnet ist, kleiner ist als der WLAN-Kanalauslastungsschwellenwert, eine verfügbare Rückkopplungs-Downlink-Bandbreite, die dem Zielzugangspunkt zugeordnet ist, größer ist als der WLAN-Downlink-Rückkopplungsratenschwellenwert, und eine verfügbare Rückkopplungs-Uplink-Bandbreite, die dem Zielzugangspunkt zugeordnet ist, größer ist als der WLAN-Uplink-Rückkopplungsratenschwellenwert; und
Lenken des Verkehrs vom UTRAN zum WLAN basierend auf der Bestimmung.

6. Vorrichtung nach Anspruch 5, wobei der UTRAN-Empfangssignalqualitätsschwellenwert, der UTRAN-Empfangssignalleistungsschwellenwert, der WLAN-Kanalauslastungsschwellenwert, der WLAN-Downlink-Backhaul-Ratenschwellenwert und der WLAN-Uplink-Backhaul-Ratenschwellenwert sich von den entsprechenden Schwellenwerten unterscheiden, die von der Steuerschaltung verwendet werden, um den Verkehr vom WLAN zum UTRAN zu lenken; oder
wobei der eine oder die mehreren Schwellenwerte der ersten RAN-Unterstützungsparameter einen UTRAN-Empfangssignalqualitätsschwellenwert, einen UTRAN-Empfangssignalleistungsschwellenwert, einen WLAN-Kanalauslastungsschwellenwert, einen WLAN-Downlink-Backhaul-Ratenschwellenwert und einen WLAN-Uplink-Backhaul-Ratenschwellenwert umfassen, und wobei, um die ersten RAN-Unterstützungsparameter anzuwenden, um den Verkehr zwischen dem UMTS-Funk und dem WLAN-Funk zu lenken, die Steuerschaltungsanordnung ferner konfiguriert ist zum:
Bestimmen, dass:
ein WLAN-Kanalauslastungswert, der mit einem bedienenden Zugangspunkt des WLAN verbunden ist, größer ist als der WLAN-Kanalauslastungsschwellenwert, eine verfügbare Rückkopplungs-Downlink-Bandbreite, die mit dem bedienenden Zugangspunkt verbunden ist, kleiner ist als der WLAN-Downlink-Rückkopplungsratenschwellenwert, oder eine verfügbare Rückkopplungs-Uplink-Bandbreite, die mit dem bedienenden Zugangspunkt verbunden ist, kleiner ist als der WLAN-Uplink-Rückkopplungsratenschwellenwert; und
ein Messwert für die empfangene Signalcodeleistung, die mit einer Zielzelle des Zielzelle des UTRAN zugeordnet ist, größer ist als der UTRAN-Schwellenwert für die empfangene Signalleistung und eine Pilotkanalqualitätsmessung, die der Zielzelle des UTRAN zugeordnet ist, größer ist als der UTRAN-Empfangssignalqualitätsschwellenwert; und
Lenken des Verkehrs von dem WLAN zu dem UTRAN basierend auf der Bestimmung.

7. System mit einer Vorrichtung nach einem der Ansprüche 1 bis 6 und einer von einem Netzwerk-Controller (148) eines universellen terrestrischen Funkzugangsnetzes, UTRAN, zu verwendenden Vorrichtung, wobei die von einem Netzwerk-Controller zu verwendende Vorrichtung umfasst:
eine Transceiver-Schaltung, um mit einer Benutzervorrichtung, UE, über das UTRAN zu kommunizieren;
eine Verwaltungsschaltung, die mit der Transceiver-Schaltung gekoppelt ist, wobei die Verwaltungsschaltung konfiguriert ist zum:
Senden, über die Transceiver-Schaltung, mittels Rundsignalisierung, von Unterstützungsparametern, die einen oder mehrere Schwellenwerte für die Verkehrslenkung zwischen dem UTRAN und einem drahtlosen lokalen Netzwerk, WLAN, beinhalten, an ein erstes Funkzugangsnetzwerk, RAN;
wobei die Verwaltungsschaltung ferner konfiguriert ist zum:
Senden, über die Transceiver-Schaltung unter Verwendung einer dedizierten Signalisierung auf einer bedienenden Zelle des UTRAN, von zweiten RAN-Unterstützungsparametern;
wobei, wenn sich die UE in einem CELL-DCH-Zustand mit der bedienenden Zelle des UTRAN befindet, die zweiten RAN-Unterstützungsparameter von der UE zu verwenden sind, um den Verkehr zwischen dem UMTS-Funkgerät und dem WLAN-Funkgerät zu lenken, während sich das UE in dem CELL-DCH-Zustand mit der bedienenden Zelle befindet;
wobei die zweiten RAN-Unterstützungsparameter bei einer SRNS-Verlagerung für das UE zu verwerfen sind;
wobei, wenn sich die UE in dem CELL-FACH-Zustand mit der bedienenden Zelle des UTRAN befindet, die zweiten RAN-Unterstützungsparameter von der UE zu verwenden sind, um den Verkehr zwischen dem UMTS-Funkgerät und dem WLAN-Funkgerät zu lenken;
wobei die zweiten RAN-Unterstützungsparameter von der UE anstelle der ersten RAN-Unterstützungsparameter nach der Übergabe von der bedienenden Zelle zu einer Zielzelle des UTRAN, die in der SRNS enthalten ist, zu verwenden sind, wenn sich das UE in dem CELL_DCH-Zustand befindet; und
wobei die ersten RAN-Unterstützungsparameter von der UE anstelle der zweiten RAN-Unterstützungsparameter zu verwenden sind, wenn die UE eine Zellenneuauswahl durchführt und das UE sich im Zustand CELL_FACH befindet.

8. System nach Anspruch 7, wobei der eine oder die mehreren Schwellenwerte der ersten RAN-Unterstützungsparameter einen ersten Satz von Schwellenwerten für die UE, die es verwenden soll, um den Verkehr vom UTRAN zum WLAN zu lenken, und einen zweiten Satz von Schwellenwerten für die UE, die es verwenden soll, um den Verkehr vom WLAN zum UTRAN zu lenken, umfassen, wobei sich der zweite Satz von Schwellenwerten von dem ersten Satz von Schwellenwerten unterscheidet, wobei der erste Satz von Schwellenwerten einen Schwellenwert für eine niedrige UTRAN-Empfangssignalqualität umfasst, einen niedrigen UTRAN-Empfangssignalleistungs-Schwellenwert, einen niedrigen WLAN-Kanalauslastungs-Schwellenwert, einen hohen WLAN-Downlink-Backhaul-Raten-Schwellenwert und einen hohen WLAN-Uplink-Backhaul-Raten-Schwellenwert beinhaltet, und wobei der zweite Satz von Schwellenwerten einen hohen UTRAN-Empfangssignalqualitäts-Schwellenwert, einen hohen UTRAN-Empfangssignalleistungs-Schwellenwert, einen hohen WLAN-Kanalauslastungs-Schwellenwert, einen niedrigen WLAN-Downlink-Backhaul-Raten-Schwellenwert und einen niedrigen WLAN-Uplink-Backhaul-Raten-Schwellenwert beinhaltet.

9. System nach Anspruch 8, wobei der erste Satz von Schwellenwerten ferner einen hohen WLAN-Baken-Empfangssignalstärkeindikator, RSSI, Schwellenwert beinhaltet, und wobei der zweite Satz von Schwellenwerten ferner einen niedrigen WLAN-Baken-RSSI-Schwellenwert beinhaltet.

10. System nach einem der Ansprüche 7 bis 9, wobei die Verwaltungsschaltung ferner konfiguriert ist, um über die Transceiver-Schaltungsanordnung eine oder mehrere WLAN-Kennungen an der UE zu senden, um einen oder mehrere WLAN-Zugangspunkte zu identifizieren, die dem UE für die Verkehrssteuerung zur Verfügung stehen; oder
wobei die zweiten RAN-Unterstützungsparameter in der Zellenaktualisierungsbestätigungsnachricht enthalten sind; oder
wobei die Verwaltungsschaltung ferner konfiguriert ist, um Werte für Schwellenwerte des ersten Satzes von Schwellenwerten und des zweiten Satzes von Schwellenwerten zu bestimmen; oder
wobei der Netzwerk-Controller ein Node B oder ein Funknetzwerk-Controller, RNC, des UTRAN ist.

11. Ein oder mehrere nicht-transitorische, computerlesbare Medien mit darauf gespeicherten Anweisungen, die, wenn sie ausgeführt werden, eine Benutzervorrichtung, UE, veranlassen zum:
Erhalten, über Rundsignalisierung in einem universellen terrestrischen Funkzugangsnetzwerk, UTRAN, ein erstes Funkzugangsnetzwerk, RAN, Unterstützungsparameter für die Verkehrssteuerung zwischen dem UTRAN und einem drahtlosen lokalen Netzwerk, WLAN;
**dadurch gekennzeichnet, dass** die Anweisungen, wenn sie ausgeführt werden, ferner die UE veranlassen zum:
Erhalten, über eine dedizierte Signalisierung in einer bedienenden Zelle des UTRAN, zweite RAN-Unterstützungsparameter für die Verkehrslenkung zwischen dem UTRAN und dem WLAN;
wenn sich das UE in einem CELL_DCH-Zustand befindet, Anwenden der zweiten RAN-Unterstützungsparameter, um den Verkehr zwischen dem UTRAN und dem WLAN zu lenken, Weiterverwenden der zweiten RAN-Unterstützungsparameter bei der Übergabe von der bedienenden Zelle zu einer Zielzelle der Vielzahl von Zellen, die sich in einem gleichen bedienenden Funknetzsubsystem, SRNS, des UTRAN befindet, und die zweiten RAN-Unterstützungsparameter bei einer SRNS-Verlegung zu verwerfen;
wenn sich das UE im Zustand CELL_FACH mit der bedienenden Zelle des UTRAN befindet, Anwenden der zweiten RAN-Unterstützungsparameter, um den Verkehr zwischen dem UMTS und dem WLAN zu lenken, und die zweiten RAN-Unterstützungsparameter bei einer Zellenneuwahl verwerfen.

12. Ein oder mehrere Medien nach Anspruch 11, wobei die Anweisungen, wenn sie ausgeführt werden, die UE ferner veranlassen zum:
Starten eines Timers, wenn es in einen UTRAN-Idle-Modus, einen UTRAN-Zellen-Paging-Kanal, CELL_PCH, -Zustand, oder einen UTRAN-Registrierungsbereich-Paging-Kanal, URA_PCH, -Zustand, eintritt;
Bestimmen, ob der Timer abgelaufen ist;
wenn bestimmt wird, dass der Timer nicht abgelaufen ist, Verwenden der zweiten RAN-Unterstützungsparameter, um den Verkehr zwischen dem UMTS und dem WLAN zu steuern; und
wenn bestimmt wird, dass der Timer abgelaufen ist, Verwerfen der zweiten RAN-Unterstützungsparameter und Verwenden der ersten RAN-Unterstützungsparameter, um den Verkehr zwischen dem UMTS und dem WLAN zu lenken.

13. Ein oder mehrere Medien nach Anspruch 11, wobei die zweiten RAN-Unterstützungsparameter einen ersten WLAN-Baken-Empfangssignalstärkeindikations-, RSSI-, Schwellenwert und einen zweiten WLAN-Baken-RSSI-Schwellenwert, der einen geringeren Wert als der erste WLAN-Baken-RSSI-Schwellenwert hat, umfassen, und wobei die Anweisungen, wenn sie ausgeführt werden, ferner das UE veranlassen zum:
Lenken von Verkehr von dem UTRAN zu dem WLAN basierend auf dem ersten WLAN-Baken-RSSI-Schwellenwert; und
Lenken von Verkehr von dem WLAN zu dem UTRAN basierend auf dem zweiten WLAN-Baken-RSSI-Schwellenwert.

14. Ein oder mehrere Medien nach Anspruch 13, wobei die RAN-Unterstützungsparameter ferner einen oder mehrere WLAN-Identifikatoren beinhalten, um WLAN-Zugangspunkte zu identifizieren, die für die UE für die Verkehrslenkung verfügbar sind.

## Revendications

1. Un appareil destiné à être employé par un équipement utilisateur (104), UE, l'appareil comprenant :
une radio de système de télécommunications mobiles universelles, UMTS, (112) pour communiquer via un réseau d'accès radio terrestre universel, UTRAN ;
une radio de réseau local sans fil, WLAN, (120) pour communiquer via un WLAN ;
une circuiterie de contrôle (108) couplée avec la radio UMTS et la radio WLAN, la circuiterie de contrôle étant configurée pour :
obtenir, via une signalisation de broadcast, des premiers paramètres d'assistance de réseau d'accès radio, RAN, incluant un ou plusieurs seuils pour le pilotage de trafic entre l'UTRAN et le WLAN ;
**caractérisé en ce que** la circuiterie de contrôle est configurée en outre pour :
obtenir, via une signalisation dédiée sur une cellule de desserte de l'UTRAN, des seconds paramètres d'assistance de RAN pour le pilotage de trafic entre l'UTRAN et le WLAN ;
dans lequel, si l'UE est dans un état CELL DCH avec la cellule de desserte de l'UTRAN, la circuiterie de contrôle est configurée en outre pour :
appliquer les seconds paramètres d'assistance de RAN pour piloter un trafic entre la radio UMTS et la radio WLAN alors que l'UE est dans l'état CELL DCH avec la cellule de desserte ;
continuer à utiliser les seconds paramètres d'assistance de RAN lors d'un handover de la cellule de desserte à une cellule cible de l'UTRAN qui est incluse dans un même sous-système de réseau radio de desserte, SRNS, que la cellule de desserte ; et
lors d'une relocalisation de SRNS pour l'UE, abandonner les seconds paramètres d'assistance de RAN et appliquer les premiers paramètres d'assistance de RAN pour piloter un trafic entre la radio UMTS et la radio WLAN ;
dans lequel, si l'UE est dans l'état CELL FACH avec la cellule de desserte de l'UTRAN, la circuiterie de contrôle est configurée en outre pour :
appliquer les seconds paramètres d'assistance de RAN pour piloter un trafic entre la radio UMTS et la radio WLAN ; et
abandonner les seconds paramètres d'assistance de RAN lors d'une resélection de cellule et appliquer les premiers paramètres d'assistance de RAN pour piloter le trafic entre la radio UMTS et la radio WLAN.

2. L'appareil selon la revendication 1,
dans lequel les paramètres d'assistance de RAN incluent en outre un ou plusieurs identificateurs de WLAN pour identifier des points d'accès de WLAN qui sont disponibles pour l'UE pour un pilotage de trafic.

3. L'appareil selon la revendication 2,
dans lequel la circuiterie de contrôle est configurée en outre pour :
démarrer une temporisation lors du passage dans un mode inactif, un état CEL_PCH ou un état URA-PCH dans l'UTRAN ; déterminer que la temporisation a expiré ; et
sur la base de la détermination, abandonner les seconds paramètres d'assistance de RAN et utiliser les premiers paramètres d'assistance de RAN pour piloter un trafic entre la radio UMTS et la radio WLAN.

4. L'appareil selon une des revendications 1 à 3, dans lequel les un ou plusieurs seuils des premiers paramètres d'assistance de RAN incluent un premier seuil d'indication d'intensité du signal reçu, RSSI, de balise WLAN et un second seuil de RSSI de balise WLAN qui a une valeur inférieure au premier seuil de RSSI de balise WLAN, et dans lequel la circuiterie de contrôle est configurée pour :
piloter un trafic de l'UTRAN au WLAN sur la base du premier seuil de RSSI de balise WLAN ; et
piloter un trafic du WLAN à l'UTRAN sur la base du second seuil de RSSI de balise WLAN.

5. L'appareil selon une des revendications 1 à 3, dans lequel les un ou plusieurs seuils des premiers paramètres d'assistance de RAN incluent un seuil de qualité du signal reçu d'UTRAN, un seuil de puissance du signal reçu d'UTRAN, un seuil d'utilisation de canal de WLAN, un seuil de débit de backhaul de liaison descendante de WLAN et un seuil de débit de backhaul de liaison montante de WLAN, et dans lequel, pour appliquer les premiers paramètres d'assistance de RAN pour piloter un trafic entre la radio UMTS et la radio WLAN, la circuiterie de contrôle est configurée pour :
déterminer :
qu'une mesure de puissance de code du signal reçu associée à une cellule de desserte de l'UTRAN est inférieure au seuil de puissance du signal reçu d'UTRAN ou qu'une mesure de qualité de canal pilote associée à la cellule de desserte de l'UTRAN est inférieure au seuil de qualité du signal reçu d'UTRAN ; et
qu'une valeur d'utilisation de canal de WLAN associée à un point d'accès cible du WLAN est inférieure au seuil d'utilisation de canal de WLAN, qu'une largeur de bande de liaison descendante de backhaul disponible associée au point d'accès cible est supérieure au seuil de débit de backhaul de liaison descendante de WLAN et qu'une largeur de bande de liaison montante de backhaul disponible associée au point d'accès cible est supérieure au seuil de débit de backhaul de liaison montante de WLAN ; et
piloter un trafic de l'UTRAN au WLAN sur la base de la détermination.

6. L'appareil selon la revendication 5, dans lequel le seuil de qualité du signal reçu d'UTRAN, le seuil de puissance du signal reçu d'UTRAN, le seuil d'utilisation de canal de WLAN, le seuil de débit de backhaul de liaison descendante de WLAN et le seuil de débit de backhaul de liaison montante de WLAN sont différents de seuils correspondants utilisés par la circuiterie de contrôle pour piloter un trafic du WLAN à l'UTRAN ; ou
dans lequel les un ou plusieurs seuils des premières paramètres d'assistance de RAN incluent un seuil de qualité du signal reçu d'UTRAN, un seuil de puissance du signal reçu d'UTRAN, un seuil d'utilisation de canal de WLAN, un seuil de débit de backhaul de liaison descendante de WLAN et un seuil de débit de backhaul de liaison montante de WLAN, et dans lequel, pour appliquer les premiers paramètres d'assistance de RAN pour piloter un trafic entre la radio UMTS et la radio WLAN, la circuiterie de contrôle est configurée en outre pour : déterminer :
qu'une valeur d'utilisation de canal de WLAN associée à un point d'accès de desserte du WLAN est supérieure au seuil d'utilisation de canal de WLAN, qu'une largeur de bande de liaison descendante de backhaul disponible associée au point d'accès de desserte est inférieure au seuil de débit de backhaul de liaison descendante de WLAN ou qu'une largeur de bande de liaison montante de backhaul disponible associée au point d'accès de desserte est inférieure au seuil de débit de backhaul de liaison montante de WLAN ; et
qu'une mesure de puissance de code du signal reçu associée à une cellule cible de l'UTRAN est supérieure au seuil de puissance du signal reçu d'UTRAN et qu'une mesure de qualité de canal pilote associée à la cellule cible de l'UTRAN est supérieure au seuil de qualité du signal reçu d'UTRAN ; et
piloter un trafic du WLAN à l'UTRAN sur la base de la détermination.

7. Un système comprenant un appareil selon une des revendications 1-6 et un appareil destiné à être employé par un contrôleur de réseau (148) d'un réseau d'accès radio terrestre universel, UTRAN, l'appareil destiné à être employé par un contrôleur de réseau comprenant :
une circuiterie d'émetteur-récepteur pour communiquer avec un équipement utilisateur, UE, via l'UTRAN ; une circuiterie de gestion couplée à la circuiterie d'émetteur-récepteur, la circuiterie de gestion étant configurée pour :
transmettre, via la circuiterie d'émetteur-récepteur, via une signalisation de broadcast, des premiers paramètres d'assistance de réseau d'accès radio, RAN, qui incluent un ou plusieurs seuils pour le pilotage de trafic entre l'UTRAN et un réseau local sans fil, WLAN ;
dans lequel la circuiterie de gestion est configurée en outre pour :
transmettre, via la circuiterie d'émetteur-récepteur à l'aide d'une signalisation dédiée sur une cellule de desserte de l'UTRAN, des seconds paramètres d'assistance de RAN ;
dans lequel, si l'UE est dans un état CELL DCH avec la cellule de desserte de l'UTRAN, les seconds paramètres d'assistance de RAN doivent être utilisés par l'UE pour piloter un trafic entre la radio UMTS et la radio WLAN alors que l'UE est dans l'état CELL DCH avec la cellule de desserte ;
dans lequel les seconds paramètres d'assistance de RAN doivent être abandonnés lors d'une relocalisation de SRNS pour l'UE ;
dans lequel, si l'UE est dans l'état CELL FACH avec la cellule de desserte de l'UTRAN, les seconds paramètres d'assistance de RAN doivent être utilisés par l'UE pour piloter un trafic entre la radio UMTS et la radio WLAN ;
dans lequel les seconds paramètres d'assistance de RAN doivent être utilisés par l'UE au lieu des premiers paramètres d'assistance de RAN après un handover de la cellule de desserte à une cellule cible de l'UTRAN qui est incluse dans le SRNS si l'UE est dans l'état CELL_DCH ; et
dans lequel les premiers paramètres d'assistance de RAN doivent être utilisés par l'UE au lieu des seconds paramètres d'assistance de RAN, si l'UE réalise une resélection de cellule et l'UE est dans l'état CELL_FACH.

8. Le système selon la revendication 7, dans lequel les un ou plusieurs seuils des premiers paramètres d'assistance de RAN incluent un premier ensemble de seuils pour l'UE à utiliser pour piloter un trafic de l'UTRAN au WLAN et un second ensemble de seuils pour l'UE à utiliser pour piloter un trafic du WLAN à l'UTRAN, dans lequel le second ensemble de seuils est différent du premier ensemble de seuils, dans lequel le premier ensemble de seuils inclut un seuil de qualité du signal reçu d'UTRAN bas, un seuil de puissance du signal reçu d'UTRAN bas, un seuil d'utilisation de canal de WLAN bas, un seuil de débit de backhaul de liaison descendante de WLAN haut et un seuil de débit de backhaul de liaison montante de WLAN haut, et dans lequel le second ensemble de seuils inclut un seuil de qualité du signal reçu d'UTRAN haut, un seuil de puissance du signal reçu d'UTRAN haut, un seuil d'utilisation de canal de WLAN haut, un seuil de débit de backhaul de liaison descendante de WLAN bas et un seuil de débit de backhaul de liaison montante de WLAN bas.

9. Le système selon la revendication 8, dans lequel le premier ensemble de seuils inclut en outre un seuil d'indication d'intensité du signal reçu, RSSI, de balise WLAN haut et dans lequel le second ensemble de seuils inclut en outre un seuil de RSSI de balise WLAN bas.

10. Le système selon une des revendications 7 à 9, dans lequel la circuiterie de gestion est configurée en outre pour transmettre, à l'UE via la circuiterie d'émetteur-récepteur, un ou plusieurs identificateurs de WLAN pour identifier un ou plusieurs points d'accès de WLAN qui sont disponibles pour l'UE pour un pilotage de trafic ; ou dans lequel les seconds paramètres d'assistance de RAN sont inclus dans le message de confirmation de mise à jour de cellule ; ou
dans lequel la circuiterie de gestion est configurée en outre pour déterminer des valeurs pour des seuils du premier ensemble de seuils et du second ensemble de seuils ; ou
dans lequel le contrôleur de réseau est un nœud B ou un contrôleur de réseau radio, RNC, de l'UTRAN.

11. Un ou plusieurs supports non transitoires lisibles par calculateur comportant des instructions, stockées dessus, qui, quand elles sont exécutées, amènent un équipement utilisateur, UE, à :
obtenir, via une signalisation de broadcast sur un réseau d'accès radio terrestre universel, UTRAN, des premiers paramètres d'assistance de réseau d'accès radio, RAN, pour le pilotage de trafic entre l'UTRAN et un réseau local sans fil, WLAN ;
**caractérisés en ce que** les instructions, quand elles sont exécutées, amènent en outre l'UE à :
obtenir, via une signalisation dédiée sur une cellule de desserte de l'UTRAN, des seconds paramètres d'assistance de RAN pour le pilotage de trafic entre l'UTRAN et le WLAN ; si l'UE est dans un état CELL_DCH, appliquer les seconds paramètres d'assistance de RAN pour piloter un trafic entre l'UTRAN et le WLAN, continuer à utiliser les seconds paramètres d'assistance de RAN lors d'un handover de la cellule de desserte à une cellule cible de la pluralité de cellules, qui est dans un même sous-système de réseau radio de desserte, SRNS, de l'UTRAN, et abandonner les seconds paramètres d'assistance de RAN lors d'une relocalisation de SRNS ;
si l'UE est dans l'état CELL_FACH avec la cellule de desserte de l'UTRAN, appliquer les seconds paramètres d'assistance de RAN pour piloter un trafic entre l'UMTS et le WLAN, et abandonner les seconds paramètres d'assistance de RAN lors d'une resélection de cellule.

12. Les un ou plusieurs supports selon la revendication 11, dans lesquels les instructions, quand elles sont exécutées, amènent en outre l'UE à :
démarrer une temporisation lors du passage dans un mode inactif d'UTRAN, un état de canal de paging de cellule, CEL_PCH, d'UTRAN ou un état de canal de paging de zone d'enregistrement d'UTRAN, URA_PCH ;
déterminer si la temporisation a expiré ;
quand il est déterminé que la temporisation n'a pas expiré, utiliser les seconds paramètres d'assistance de RAN pour piloter un trafic entre l'UMTS et le WLAN ; et
quand il est déterminé que la temporisation a expiré, abandonner les seconds paramètres d'assistance de RAN et utiliser les premiers paramètres d'assistance de RAN pour piloter un trafic entre l'UMTS et le WLAN.

13. Les un ou plusieurs supports selon la revendication 11, dans lesquels les seconds paramètres d'assistance de RAN incluent un premier seuil d'indication d'intensité du signal reçu, RSSI, de balise WLAN et un second seuil de RSSI de balise WLAN qui a une valeur inférieure au premier seuil de RSSI de balise WLAN, et dans lesquels les instructions, quand elles sont exécutées, amènent en outre l'UE à :
piloter un trafic de l'UTRAN au WLAN sur la base du premier seuil de RSSI de balise WLAN ; et
piloter un trafic du WLAN à l'UTRAN sur la base du second seuil de RSSI de balise WLAN.

14. Les un ou plusieurs supports selon la revendication 13, dans lesquels les paramètres d'assistance de RAN incluent en outre un ou plusieurs identificateurs de WLAN pour identifier des points d'accès de WLAN qui sont disponibles pour l'UE pour un pilotage de trafic.
